# EUROPÄISCHE PATENTSCHRIFT

(11) **EP 2 874 811 B1**
(45) Veröffentlichungstag und Bekanntmachung des Hinweises auf die Patenterteilung: **24.10.2018**
(21) Anmeldenummer: 13744997.1
(22) Anmeldetag: 19.07.2013
(51) Int. Cl.: B32B 7/02, B32B 1/08, B65D 35/10

(54) **MEHRSCHICHTIGES LAMINAT FÜR TUBEN MIT EINGEBETTETER BARRIERESCHICHT SOWIE DARAUS HERGESTELLTE TUBE UND VERWENDUNG EINES SOLCHEN LAMINATS**
MULTI-LAYER LAMINATE FOR TUBES WITH AN EMBEDDED BARRIER LAYER AND TUBE PRODUCED THEREFROM AND USE OF SUCH A LAMINATE
STRATIFIÉ MULTICOUCHE POUR TUBES POURVU D'UNE COUCHE BARRIÈRE INTÉGRÉE AINSI QUE TUBE FABRIQUÉ À PARTIR DE CE STRATIFIÉ ET UTILISATION D'UN TEL STRATIFIÉ

(30) Priorität: 23.07.2012 DE 102012014564; 05.03.2013 DE 102013102138
(43) Veröffentlichungstag der Anmeldung: 27.05.2015
(73) Patentinhaber: Huhtamaki Flexible Packaging Germany GmbH & Co. KG, 87671 Ronsberg/Allgäu (DE)
(72) Erfinder: HOLZMÜLLER, Arno, 87437 Kempten (DE); MARZ, Manfred, 87448 Waltenhofen (DE); SCHRÄGLE, Matthias, 87452 Altusried (DE); WIESER, Manfred, 87463 Dietmannsried (DE); DAELMANS, Eddy, B-3650 Dilsen-Stokkem (BE)
(74) Vertreter: Popp, Eugen
(86) Internationale Anmeldenummer: PCT/EP2013/065327
(87) Internationale Veröffentlichungsnummer: WO 2014/016221

(56) Entgegenhaltungen:
- WO-A1-2004/045845
- WO-A1-2008/064912
- WO-A1-2008/135755
- WO-A1-2013/107901
- GB-A- 1 561 872
- US-A- 4 659 408

## Beschreibung

Die Erfindung betrifft ein mehrschichtiges Laminat für Tuben mit eingebetteter Barriereschicht gemäß dem Oberbegriff von Patentanspruch 1, eine aus einem solchen Laminat hergestellte Tube gemäß dem Oberbegriff von Patentanspruch 12 und die Verwendung eines solchen Laminats gemäß dem Oberbegriff von Patentanspruch 13.

Mehrschichtige Laminate werden im Bereich der Verpackungsindustrie, insbesondere auch zur Herstellung von Tuben, benötigt. Sie weisen, je nach Dicke des Laminats, flexible bis relativ formstabile Eigenschaften auf und werden u. a. zur Herstellung von Tuben, Tüten und anderen Verpackungen verwendet. Insbesondere eignen sich mehrschichtige Laminate, die eine eingebettete Barriereschicht, beispielsweise in Form einer Aluminiumfolie aufweisen, für die Verpackung von aromahaltigen Substanzen. Dies basiert darauf, dass eine in dem Laminat vorhandene Barriereschicht, wie eine Aluminiumfolie, für zahlreiche, vor allem flüchtige Substanzen als Sperrschicht wirkt. Als problematisch hat sich jedoch erwiesen, dass die Barriereschicht selbst, und hier insbesondere eine Aluminiumschicht, durch aggressive Substanzen, wie beispielsweise Säuren und aggressive organische Substanzen angegriffen wird, so dass eine Abschirmung der Barriereschicht bzw. Aluminiumschicht gegenüber dem Inhaltstoffen der Tube notwendig ist. Dies wurde bislang dadurch erreicht, dass die die Barriereschicht umhüllenden Schichten große Materialstärken und somit eine große Dicke aufwiesen, so dass die jeweiligen, die Aluminiumschicht angreifenden aggressiven Substanzen einen längeren Diffusionsweg überwinden mussten. Darüber hinaus wurde eine Aluminiumschicht gegenüber dem Verpackungsinhalt gegebenenfalls durch eine zusätzliche Barriereschicht, z.B. aus Ethylenvinylalkoholcopolymer (EVOH) abgeschirmt.

Die Notwendigkeit der Verwendung derartiger dicker Laminatschichten führt jedoch dazu, dass das mehrschichtige Laminat insgesamt sehr dick, steif und schlecht zu handhaben, sowie nicht zuletzt aufgrund der großen Menge einzusetzenden Materials teuer wird.

So bewegen sich die Dicken der eingesetzten Laminate, beispielsweise im Zahnpastatubenbereich, in der Größenordnung eines Viertel Millimeters, was in lap- oder fin-seal-Siegelbereichen Materialdicken von einem halben Millimeter und mehr führt. Diese große Materialdicke wirkt sich in allen Bereichen einer Tube sowohl ästhetisch als auch arbeitstechnisch nachteilig aus, in denen eine Überlappung des Laminats notwendig ist. Eine solche Überlappung ist beispielsweise bei der Herstellung eines röhrenförmigen Lap-Seal-Körpers aus einem flächigen Laminatzuschnitt notwendig.

Ein weiterer Nachteil derartiger dicker Laminate besteht u.a. auch darin, dass es bei Verwendung solcher Laminate schwierig bis unmöglich ist, einen gleichmäßig geformten Tubenkörper herzustellen. Diese Schwierigkeit ergibt sich zum Einen aus einer stark verminderten Flexibilität und Steifheit von Siegelabschnitten, die zum Herstellen eines Tubenkörpers mittels einer Lap-Seal-Versiegelung notwendig sind. Darüber hinaus wird bei aus dem Stand der Technik bekannten Laminaten vielfach gerecktes bzw. orientiertes Folienmaterial eingesetzt. Ein solches orientiertes Folienmaterial hat jedoch, insbesondere beim Siegeln, den Nachteil, dass das Folienmaterial beim Erhitzen während des Siegelvorgangs seine Orientierung zumindest teilweise verliert und hierdurch zumindest partiell schrumpft. Bei der Herstellung von Tuben ist dieser Effekt besonders problematisch, da eine Siegeltemperatur hier aufgrund der großen Schichtdicke im Siegelbereich über den Querschnitt der zu versiegelnden Laminatdicke nicht konstant ist, was dazu führt, dass ein Rückschrumpfen einer orientierten Folie über einen Dickenquerschnitt des Laminats nicht konstant, sondern ungleichmäßig erfolgt. Somit kann mit einem derartigen Laminat, insbesondere wenn dies eine, wie vorbeschrieben, große Laminatdicke erfordert und aufweist, praktisch keine tatsächlich runde, sondern allenfalls eine ovale Tubenform hergestellt werden, was nicht nur optisch unschön ist, da die Tube eine sehr dicke Lap-Seal-Naht aufweist, die optisch und auch haptisch unbefriedigend ist, da diese Naht als linienförmige Verdickung sichtbar und fühlbar ist.

Ein weiterer Nachteil, der sich aus der Verwendung derartiger aus dem Stand der Technik bekannter dicker Laminate ergibt, besteht bei der Tubenherstellung ferner darin, dass es praktisch nicht möglich ist, einen runden Tubenkörper herzustellen, in den sodann ein Tubenkopf eingesiegelt wird, da die Steifheit bisheriger Laminate, insbesondere im Bereich der lap-seal-Naht einer Tube, dazu führt, dass der Krümmungsradius im Bereich der lap-seal-Naht größer ist, als im restlichen Tubenumfang. Da der Tubenkopf üblicherweise im Wesentlichen vollkommen rund ausgebildet ist, ergeben sich somit Schwierigkeiten, diesen runden Tubenkopf in einen nicht runden Tubenkörper einzusetzen, so dass gemäß dem derzeitigen Stand der Technik hierfür zusätzliche Maßnahmen und Hilfsvorrichtungen erforderlich sind, die zusätzliche Arbeitsgänge und eine Verzögerung bei der Tubenherstellung mit sich bringen.

Ein weiterer Nachteil bisheriger Laminate besteht ferner in der Gefahr einer Delaminierung, die naturgegebenermassen umso größer ist, je dicker die das Laminat bildenden Laminatschichten sind, da die einzelnen Laminatschichten bei einem Rollen des Laminats einer umso größeren Scherbeanspruchung ausgesetzt sind, je dicker diese einzelnen Schichten sind. Die Gefahr einer Delaminierung verstärkt sich hierbei noch mit der Empfindlichkeit der verwendeten Materialien gegenüber den jeweiligen Inhaltsstoffen der Tube.

Ferner ist auch die Haptik bei bisher bekannten Laminaten unzureichend, was im wesentlichen ebenfalls auf die notwendigen hohen Schichtdicken bisher bekannter Laminate zurückzuführen ist, da diese aufgrund der Materialdicke im Bereich der lap-seal-Naht einer Tube immer eine gewisse Steifheit und Unrundheit und einen daraus resultierenden Grat entlang der Lap-Seal-Naht der Tube mit sich bringen.

Derartige vorgenannte Nachteile aufweisende, Laminate sind aus der WO 2008/064912 A1 sowie aus den weiteren Veröffentlichungen WO 2008/135755 A1, WO 2004/045845 A1, US 4,659,408 A, GB 1 561 872 A und WO 2013/107901 A1 bekannt.

Die Aufgabe der Erfindung besteht darin, ein mehrschichtiges Laminat mit eingebetteter Barriereschicht sowie daraus hergestellte Verpackungen zur Verfügung zu stellen, das verbesserte Barriereeigenschaften bei gleichzeitig dünneren Schichtdicken der einzelnen Laminatlagen und eine verfahrenstechnisch einfache, schnelle und günstige Herstellung von runden Laminatröhren, insbesondere Tuben ermöglicht, wobei das Laminat günstig herstellbar und individuell verbessert bedruckbar ist und darüber hinaus daraus hergestellte Gegenstände eine verbesserte Haptik sowie eine verbesserte Umweltverträglichkeit bietet.

Diese Aufgabe wird durch ein mehrschichtiges Laminat gemäß Patentanspruch 1 sowie durch eine aus einem solchen Laminat hergestellte Tube gemäß Patentanspruch 12 sowie ferner durch die Verwendung eines solchen Laminats zur Herstellung einer Tube gemäß Anspruch 13, gelöst.

Insbesondere wird die Aufgabe durch ein mehrschichtiges Laminat für Tuben mit eingebetteter Barriereschicht gelöst, wobei das Laminat eine das Laminat zu einer Seite begrenzende äußere Deckschicht sowie eine das Laminat zur anderen Seite begrenzende innere Deckschicht aufweist, zwischen welchen die Barriereschicht angeordnet ist, wobei das Laminat bezüglich der Barriereschicht, insbesondere im Hinblick auf die Deckschichten, nämlich die äußere und die innere Deckschicht, eine asymmetrische Struktur hat, wobei sich insbesondere eine Molekular-Orientierung der inneren Deckschicht von einer Molekular-Orientierung der äußeren Deckschicht, jeweils bezogen auf eine Dehnung oder Reckung in Maschinenrichtung (MD) sowie quer zu der Maschinenrichtung (CD) unterscheidet. Dies bedeutet, dass die äußere Deckschicht eine Orientierung aufweist, während die innere Deckschicht keine Orientierung aufweist, oder dass eine Orientierung der äußeren Deckschicht anders, insbesondere größer, ist als eine Orientierung der inneren Deckschicht.

Ein wesentlicher Gedanke der Erfindung besteht hierbei darin, dass erfindungsgemäß herausgefunden wurde, dass der Effekt eines Rückschrumpfens einer orientierten Deckschicht im Zuge der Herstellung einer Lap-Seal-Versiegelung zur Herstellung einer Tubenröhre erstaunlicher einfach beeinflusst werden kann, indem die beiden, ein mehrschichtiges Laminat für Tuben nach außen begrenzenden Deckschichten unterschiedlich ausgeführt werden, wobei eine Reckung oder Dehnung einer äußeren Deckschicht anders, insbesondere größer, als die Dehnung oder Reckung einer inneren Deckschicht ist. Hierbei hat es sich ferner erfindungsgemäß als vorteilhaft erwiesen, wenn die äußere Deckschicht biaxial orientiert bzw. biaxial gereckt ist, während die innere Deckschicht nicht oder monoaxial gedehnt oder gereckt ist.

Erfindungsgemäß weist deshalb die äußere Deckschicht eine biaxiale Orientierung mit einer Reckung in Maschinenrichtung (MD) von 200% bis 800%, vorzugsweise von 400% bis 600% und besonders bevorzugt von im Wesentlichen 500% sowie quer zur Maschinenrichtung (CD) von 500% bis 1300%, vorzugsweise von 700% bis 900% und besonders bevorzugt von im Wesentlichen 800% auf, während die innere Deckschicht keine oder eine monoaxiale Orientierung aufweist.

Auf diese Weise ist es möglich zu verhindern, dass die innere Deckschicht rückschrumpft oder alternativ eine gezielte Rückschrumpfung der inneren Deckschicht im Zuge eines Siegelverfahrens einzustellen, so dass im Ergebnis eine optimiert runde per Lap-Seal geschlossene Laminatröhre zur Herstellung von Tuben erzeugt werden kann.

In Bezug auf das Material der eingebetteten Barriereschicht kann erfindungsgemäß das Barriereschichtmaterial Aluminium verwendet werden. Es ist jedoch ebenso möglich, als Barriereschichtmaterial Polyamid, insbesondere amorphes und/oder aromatisches und/oder teilaromatisches Polyamid, Ethylenvinylalkoholcopolymer (EVOH), Polyacrylnitril (PAN), Polyethylenterephthalat (PET) oder SiO_{X} oder Aluminiumoxid zu verwenden. Die Wahl des jeweiligen Barriereschichtmaterials richtet sich hierbei nach den jeweiligen Inhaltsstoffen der hergestellten Tube, respektive nach den aggressiven Materialien, welche zurückgehalten werden sollen.

Im Folgenden wird die Erfindung nun anhand eines mehrschichtigen Laminats für Tuben mit eingebetteter Aluminiumschicht näher erläutert, wobei darauf hingewiesen sei, dass auch eine Barriereschicht aus Ethylenvinylalkoholcopolymer, gegebenenfalls in Kombination mit Polyamid, in dem erfindungsgemäßen mehrschichtigen Laminat hervorragend verwendet werden kann.

Ferner sei darauf hingewiesen, dass die in dem erfindungsgemäßen Laminat eingesetzte Barriereschicht selbst auch mehrlagig sein kann, wobei bevorzugt auf vorgefertigte, beispielsweise coextrudierte Folienanordnungen zurückgegriffen werden kann.

Hierbei hat sich beispielsweise eine Ethylenvinylalkoholcopolymerschicht bewährt, die mittels eines Haftvermittlers zwischen zwei Polyolefinschichten, wie beispielsweise Polyethylenschichten eingebettet ist. Auch ein Verbund von Polyamid-Ethylenvinylalkoholcopolymer-Polyamid, d.h. eine zwischen zwei Polyamidschichten eingebettete Ethylenvinylalkoholcopolymerschicht, hat sich bewährt, wobei in diesem Fall die beiden außen liegenden Polyamidschichten mittels eines Haftvermittlers mit jeweils einer Polyolefinschicht, wie beispielsweise einer Polyethylenschicht, verbunden sein können. Diese vorgenannten Strukturen können vorgefertigt sein und in das erfindungsgemäße mehrschichtige Laminat integriert werden. Alternativ ist auch eine simultane Extrusion der einzelnen Schichten des erfindungsgemäßen mehrschichtigen Laminats möglich, sofern die jeweiligen Einzelschichten extrudierbar sind.

Wie vorerwähnt, wird die Aufgabe der Erfindung somit durch ein mehrschichtiges Laminat für Tuben mit eingebetteter Aluminiumschicht gelöst, wobei das Laminat eine das Laminat nach außen begrenzende äußere, insbesondere biaxial, orientierte coextrudierte Deckschicht sowie eine das Laminat nach innen begrenzende innere nicht oder geringer als die äußere Deckschicht orientierte Deckschicht aufweist, wobei die äußere Deckschicht über ein äußeres Zwischenschichtmaterial mit der Barriere- bzw. Aluminiumschicht und die innere Deckschicht gemäß einer Ausführungsform über ein inneres Zwischenschichtmaterial mit der gegebenenfalls mehrschichtigen Barriereschicht, in diesem Fall mit der Aluminiumschicht verbunden sind.

Gemäß einer weiteren Ausführungsform der Erfindung kann die innere Deckschicht auch unmittelbar mit der Barriere- bzw. Aluminiumschicht verbunden sein, wobei die innere Deckschicht in diesem Fall eine Mantelschicht, die als Skin-Layer ausgebildet sein kann, aufweist, die vorzugsweise aus einem Polyolefin, bevorzugt aus einem Polyethylen, besteht und die, gegebenenfalls über einen Haftvermittler, an die Barriere-bzw. Aluminiumschicht angrenzt.

Ein wichtiger Gedanke der Erfindung besteht darin, dass die Barriereschicht, nämlich hier die Aluminiumschicht, ein- oder beidseitig und vorzugsweise unmittelbar von einem Zwischenschichtmaterial, nämlich einem einer orientierten coextrudierten äußeren Deckschicht zugewandten äußeren Zwischenschichtmaterial einerseits sowie einem einer inneren nicht oder monoaxial orientierten Deckschicht zugewandten inneren Zwischenschichtmaterial andererseits oder die Barriereschicht alternativ innenseitig unmittelbar von der inneren nicht oder monoaxial orientierten Deckschicht umgeben ist, wobei die innere Deckschicht jedenfalls geringer als die äußere Deckschicht orientiert oder nicht orientiert ist.

Ein weiterer wesentlicher Aspekt der Erfindung besteht ferner darin, dass das erfindungsgemäße Laminat einerseits durch eine orientierte coextrudierte Deckschicht nach außen begrenzt ist sowie andererseits, d.h. auf der der orientierten coextrudierten Deckschicht gegenüberliegenden Seite des Laminats durch eine nicht oder geringer als die äußere Deckschicht oder durch eine monoaxial orientierte Deckschicht begrenzt ist.

Es sei an dieser Stelle darauf hingewiesen, dass das Merkmal, dass "die innere Deckschicht geringer orientiert ist als die äußere Deckschicht" im Rahmen dieser Erfindung bedeutet, dass die innere Deckschicht nicht orientiert ist, während die äußere Deckschicht orientiert ist, oder dass innere Deckschicht in eine Richtung orientiert ist, während die äußere Deckschicht in mehr als eine Richtung orientiert ist oder dass ein Maß mit welchem die innere Deckschicht orientiert ist, geringer ist als ein Maß mit welchem die äußere Deckschicht orientiert ist oder dass die innere Deckschicht in mehr als eine Richtung orientiert ist, während die äußere Deckschicht ebenfalls in mehr als eine Richtung und ferner mit einem höheren Reck- oder Aufblasverhältnis als die innere Deckschicht, orientiert ist.

Bei der Herstellung einer Tube aus dem erfindungsgemäßen Laminat ist die Außenseite der Tube definitionsgemäß aus der orientierten coextrudierten Deckschicht gebildet, während die Innenseite der Tube durch die nicht orientierte Deckschicht gebildet wird. In Anlehnung an diese Anordnung wird die orientierte coextrudierte Deckschicht deshalb im Rahmen dieser Erfindung als äußere Deckschicht bezeichnet, während die bei einem Tubenkörper dem Innenraum der Tube zugewandte nicht oder geringer orientierte Deckschicht als innere Deckschicht bezeichnet wird.

Sowohl die äußere Deckschicht als auch die innere Deckschicht stellen jeweilige das Laminat zur Außenseite und zur Innenseite begrenzende Schichten dar, die jedoch, sofern erforderlich, eine Bedruckung sowie gegebenenfalls eine die Bedruckung überdeckende Schutzschicht aufweisen können.

Ein weiterer wesentlicher Aspekt der Erfindung besteht ferner darin, dass das erfindungsgemäße Laminat zumindest hinsichtlich seiner inneren und seiner äußeren Deckschicht asymmetrisch aufgebaut ist, wobei die äußere Deckschicht in jedem Fall eine orientierte coextrudierte Deckschicht ist, die entweder monoaxial oder, bevorzugt, biaxial, d.h. in Maschinenrichtung sowie auch quer zur Maschinenrichtung, gereckt ist, während die innere Deckschicht keine oder eine geringere Orientierung und/oder Reckung aufweist als die äußere Deckschicht, oder alternativ eine monoaxiale Reckung oder ein geringeres Orientierungsverhältnis aufweist als die äußere Deckschicht.

Diesbezüglich sei darauf hingewiesen, dass eine monoaxiale äußere Deckschicht nicht bevorzugt ist, jedoch unter Umständen mit einer nicht orientierten inneren Deckschicht kombiniert werden kann.

Eine bevorzugte Ausführungsform der Erfindung besteht hingegen in der Verwendung einer biaxial orientierten äußeren Deckschicht in Kombination mit einer nicht- oder monoaxial orientierten inneren Deckschicht. Die innere Deckschicht ist hierbei entweder als gereckte Folie oder, erfindungsgemäß bevorzugt, als Blasfolie ausgebildet, wobei das Aufblasverhältnis in Maschinenrichtung (MD) zur Querrichtung (CD) im Bereich von 1 : 1 bis 1 : 2,5, vorzugsweise im Bereich von 1 : 1,05 bis 1 : 1,75 und besonders bevorzugt im Bereich von 1 : 1,2 bis 1 : 1,9 liegt. Hierbei sind die Verhältnisangaben jeweils so zu verstehen, dass eine Reckung bzw. Dehnung der inneren Deckschicht immer im Wesentlichen nur in einer Richtung, d.h. entweder in Maschinenrichtung oder quer hierzu erfolgt, so dass jedenfalls eine ungereckte oder eine nur monoaxial gereckte bzw. gedehnte Folie innerhalb der angegebenen Grenzen vorliegt.

Es hat sich erfindungsgemäß herausgestellt, dass es mit einem Laminat, das eine derartige asymmetrische Struktur aufweist, möglich ist, Tubenkörper zu fertigen, die eine außerordentlich gute Rundheit aufweisen, was sich insbesondere im Fertigungsprozess der Tube als besonders vorteilhaft herausgestellt hat, wobei das Laminat eine hohe Stabilität, eine gegenüber dem Stand der Technik verbesserte Haptik und ferner sehr gute Barriereeigenschaften, insbesondere auch im Hinblick auf einen Schutz einer Aluminiumschicht bzw. -folie, aufweist.

Somit wird die eingebettete Barriereschicht sowohl durch das äußere Zwischenschichtmaterial als auch durch die orientierte coextrudierte äußere Deckschicht einerseits als auch gegebenenfalls durch das innere Zwischenschichtmaterial und jedenfalls durch die innere Deckschicht andererseits sowohl in mechanischer Hinsicht als auch im Hinblick auf diffusionsfähige Substanzen geschützt, da diese von einer der Innenseite einer Tube zugewandten Seite des Laminats zunächst durch die innere nicht orientierte Deckschicht und anschließend durch das Zwischenschichtmaterial oder alternativ nur durch die innere Deckschicht, sofern diese selbst eine, die eingebettete Barriereschicht, insbesondere Aluminiumschicht, schützende Barriereschicht aufweist, diffundieren müssen, um die eingebettete Barriereschicht, beispielsweise Aluminiumschicht, zu erreichen.

Die orientierte coextrudierte äußere Deckschicht ist, genauso wie das äußere Zwischenschichtmaterial außenseitig der eingebetteten Barriereschicht vorhanden, so dass ein Schutz der Barriereschicht vor aggressiven Substanzen auch von einer Tubenaußenseite optimiert ist.

Erfindungsgemäß ist die coextrudierte orientierte äußere Deckschicht zumindest zweilagig ausgebildet und umfaßt wenigstens eine orientierte Polymerschicht und wenigstens eine, gegebenenfalls zwei oder mehrere Mantelschichten. Die Mantelschichten, die auch als Skin-Layer bezeichnet werden, umgeben die Polymerschicht und sind ihrerseits auf ihrer der Polymerschicht abgewandten Seite bedruckbar.

Diese Skin-Layer sind erfindungsgemäß und vorzugsweise sehr dünn ausgebildet und haben eine Schichtdicke im Bereich von 0,2 µm bis 10 µm, vozugsweise im Bereich von 0,8 µm bis 6 µm und besonders bevorzugt im Bereich von 1 µm bis 2,5 µm und bilden somit eine Art von die Polymerschicht umgebenden Haut.

Ferner sind diese Skin-Layer siegelfähig ausgebildet, so dass ohne weiteres eine Lap-Seal- oder eine Fin-Seal-Versiegelung eines solchen Laminats möglich ist. Eine bevorzugte Ausführungsform der äußeren Deckschicht besteht hierbei darin, dass eine Polymerschicht, beispielsweise aus Polypropylen, beidseitig von einem Skin-Layer umgeben ist, wobei die beidseitig angeordneten Skin-Layer in Bezug auf Dicke und Material gleichartig oder identisch sind. Die Dicke der Polymerschicht beträgt hierbei erfindungsgemäß ein 6- bis 100-faches, bevorzugt ein 14- bis 81-faches und besonders bevorzugt ein 50- bis 70-faches oder beispielsweise ein 10- bis 30-faches der Dicke der Skin-Layer. Dies bedeutet, dass die Skin-Layer in Bezug auf die Polymerschicht sehr dünn ausgebildet sind, so dass sich im Ergebnis eine dünne äußere Deckschicht ergibt, die gemäß einer bevorzugten Ausführungsform der Erfindung eine Dicke im Bereich von ca. 40 bis ca. 70 µm aufweist.

Die äußere Deckschicht ist erfindungsgemäß coextrudiert, wobei die Polymerschicht und der oder die Skin-Layer in einem Arbeitsgang extrudiert und verbunden werden. Nach einem Aufbringen des oder der Skin-Layer wird die coextrudierte Deckschicht, insbesondere biaxial, gereckt, so dass nach dem Reckvorgang die gesamte Deckschicht orientiert ist. Dies betrifft insbesondere auch die Skin-Layer.

Die innere Deckschicht des erfindungsgemäßen Laminats besteht, wie vorerwähnt, in jedem Fall aus einem Material, das gemäß vorstehender erfindungsgemäßer Definition geringer orientiert ist als die äußere Deckschicht.

Die innere Deckschicht des erfindungsgemäßen Laminats kann als Monofolie oder als zwei- oder dreilagige Mehrschichtfolie ausgebildet sein

Im Falle einer Ausbildung der inneren Deckschicht als Monofolie besteht diese im Wesentlichen aus siegelfähigen Materialien, wie beispielsweise Polyolefinen,), wie Polyethylen (PE), insbesondere Polyethylen mit schwach verzweigten Polymerketten und daher hoher Dichte (HDPE), Polyethylen mit stark verzweigten Polymerketten und daher geringer Dichte (LDPE) oder linearem Polyethylen niederer Dichte (LLDPE), und/oder Polypropylen (PP), da diese Materialien besonders gut zur Herstellung einer Fin- oder bevorzugt Lap-Seal-Siegelung geeignet sind, mit der ein Tubenkörper zu einer Röhre geformt und sodann weiterverarbeitet werden kann.

Im Falle einer Ausbildung der inneren Deckschicht als zwei- oder dreilagige Mehrschichtfolie setzt sich die innere Deckschicht im Wesentlichen aus einem oder zwei Skin-Layer(n) und/oder einer Polymerschicht und/oder einer Innen-Barriereschicht zusammen.

Der oder die Skin-Layer basiert hierbei erfindungsgemäß auf siegelfähigen Materialien, wie beispielsweise Polyolefinen, wie insbesondere und bevorzugt Polyethylen, da dieses/diese Material(ien) besonders gut zur Herstellung einer Fin- oder bevorzugt Lap-Seal-Siegelung geeignet ist/sind, mit der ein Tubenkörper zu einer Röhre geformt und sodann weiterverarbeitet werden kann. Ferner können die für eine Skin-Layer verwendbaren Polyolefine die siegelbaren Materialien HDPE, LDPE oder LLDPE, und/oder Polypropylen (PP) sein.

Die einzelnen Schichten einer als zwei- oder dreilagige Mehrschichtfolie ausgebildeten inneren Deckschicht können gleiche oder unterschiedliche Polyolefine, wie beispielsweise Polyethylen oder Polypropylen sein können, die miteinander verbunden sind. Eine derartige Verbindung unterschiedlicher Schichten zur Bildung der inneren Deckschicht kann erfindungsgemäß beispielsweise durch Coextrusion erfolgen, wobei die einzelnen Schichten beispielsweise aus Polyethylen hoher Dichte (HDPE) oder aus Polyethylen niedriger Dichte (LDPE) oder aus linearem Polyethylen niedriger Dichte (LLDPE) bestehen können. Diesbezüglich ist beispielsweise auch eine Kernschicht aus Polypropylen mit jeweiligen Skin-Layern aus Polyethylen denkbar, die beispielsweise analog zur äußeren Deckschicht aufgebaut sein können.

Hierbei ist es von besonderem Vorteil, wenn zum Bilden einer Lap-Seal-Verbindung zur Bildung des Tubenkörpers für die äußere orientierte coextrudierte Deckschicht und für die innere nicht orientierte Deckschicht identische Materialien eingesetzt werden, die miteinander versiegelt werden. Dies bedeutet, dass für die äußere orientierte coextrudierte Deckschicht und für die innere nicht oder geringer orientierte Deckschicht entweder gleichartige Skin-Layer aus Polyethylen oder Polypropylen verwendet werden, oder aber eine jeweilige als innere Deckschicht ausgebildete Monofolie aus demselben Material besteht, wie die Schicht der äußeren Deckschicht, mit welcher die Monofolie bei einer Lap-Seal-Versiegelung versiegelt wird.

Somit umfasst die innere Deckschicht bei einer mehrlagigen Ausführung eine Polymerschicht, die zumindest einseitig, vorzugsweise beidseitig, eine oder mehrere, insbesondere im Wesentlichen identische, Mantelschicht(en) in Form jeweiliger Skin-Layern umfaßt, die vorzugsweise bezüglich der Polymerschicht symmetrisch angeordnet sind. Die Skin-Layer sind im Verhältnis zur Polymerschicht dick, vorzugsweise jeweils gleich dick, ausgebildet und mit der Polymerschicht durch Coextrusion verbunden.

Alternativ kann die innere Deckschicht bei einer mehrlagigen Ausführung eine, vorzugsweise zentrale, Innen-Barriereschicht aufweisen, die beidseitig, und vorzugsweise bezüglich der Innen-Barriereschicht symmetrisch, von jeweils von einer, insbesondere im Wesentlichen identischen, Mantelschicht, beispielsweise in Form eines Skin-Layers aus vorgenannten Materialien, umgeben ist, wobei zwischen der Innen-Barriereschicht und dem jeweiligen Skin-Layer gegebenenfalls, insbesondere vorzugsweise, ein Haftvermittler oder Klebstoff, insbesondere ein Kaschierklebstoff, vorgesehen ist.

Als Materialien der Innen-Barriereschicht kommen erfindungsgemäß Polyamid, insbesondere amorphes und/oder aromatisches und/oder teilaromatisches Polyamid, Ethylenvinylalkoholcopolymer (EVOH), Polyacrylnitril (PAN), Polyethylenterephthalat (PET), Aluminium, SiO_{X}, AlO_{X} sowie Mischungen und/oder Kombinationen vorgenannter Materialien in Betracht, wobei darauf hingewiesen sei, dass eine Innen-Barriereschicht-Schichtenfolge von Polyamid-EVOH-Polyamid eine besonders wirksame Schutzbarriere gegenüber gasförmigen und/oder diffusionsfähigen Substanzen darstellt, wie sich erfindungsgemäß herausgestellt hat. Sofern eine mehrschichtige Innen-Barriereschicht verwendet wird, können die jeweiligen Lagen der Innen-Barriereschicht nach Bedarf mit einem Kaschierklebstoff verbunden sein. Selbiges gilt für eine Verbindung der Innen-Barriereschicht zu jeweils benachbarten Schichten.

Erfindungsgemäß ist das der Tubenaußenseite zugewandte äußere Zwischenschichtmaterial wenigstens einlagig, bevorzugt jedoch mehrlagig, insbesondere ein- bis dreilagig und besonders bevorzugt zweilagig ausgebildet und umfasst eine erste und/oder eine zweite und/oder eine dritte Verbindungsschicht.

Das der Tubeninnenseite zugewandte innere Zwischenschichtmaterial ist wenigstens einlagig, bevorzugt mehrlagig, insbesondere ein- bis fünflagig ausgebildet, wobei ein bis drei Lagen davon das Material der erstenund/oder der zweiten und/oder der dritten Verbindungsschicht aufweisen. Eine besonders bevorzugte Ausführungsform des inneren Zwischenschichtmaterials ist zweischichtig aus unterschiedlichen Polymeren aufgebaut.

Ferner umfasst das der Tubeninnenseite zugewandte innere Zwischenschichtmaterial gemäß einer Ausführungsform wenigstens eine zusätzliche Barriereschicht, die gegebenenfalls zumindest einseitig eine Haftschicht, insbesondere eine Klebstoffschicht, einen Haftvermittler oder einen Kaschierkleber, aufweist. Durch diese Haftschicht wird gewährleistet, dass die zusätzliche Barriereschicht optimal in das innere Zwischenschichtmaterial integriert ist und eine optimale Verbindung mit den die zusätzliche Barriereschicht umgebenden Schichten hat. Auch diese zusätzliche Barriereschicht kann ihrerseits mehrschichtig aufgebaut sein und einen Verbund aus den vorgenannten organischen Barriereschichtmaterialien bilden, wobei wiederum auch bereits vorgefertigte Barriereschichtverbünde, die gegebenenfalls Skin-Layer umfassen, zum Einsatz kommen können.

Ferner sei darauf hingewiesen, dass ein inneres Zwischenschichtmaterial, das eine zusätzliche Barriereschicht aufweist, durch eine innere Deckschicht mit einer Innen-Barriereschicht ersetzt werden kann.

Die erfindungsgemäß verwendeten Materialien sind in der nachfolgenden Tabelle aufgeführt und können in der jeweiligen Schicht jeweils allein oder in Kombination vorhanden sein.

| Schicht | | Material(ien) |
|---|---|---|
| äußere Deckschicht (30a) | Mantelschicht (10o) oder Skin-Layer | Polyolefin(e), wie Polyethylen (PE), insbesondere HDPE, LDPE oder LLDPE, und/oder Polypropylen (PP), Polyethylenterephthalat (PETP), Polyethylenterephthalatglykol (PETG), Mischungen vorgenannter Materialien |
| | orientierte Polymerschicht (20o) | Polyolefin(e), wie Polyethylen (PE), insbesondere HDPE, LDPE oder LLDPE, und/oder Polypropylen (PP), Polyethylenterephtalat (PET), Polyamid (PA) |
| innere Deckschicht (30i) | Mantelschicht (10n) oder Skin-Layer | Polyolefin(e), wie Polyethylen (PE), insbesondere HDPE, LDPE oder LLDPE, und/oder Polypropylen (PP), Polyethylenterephthalat (PETP), Polyethylenterephthalatglykol (PETG), Mischungen vorgenannter Materialien |
| | Polymerschicht (20n) | Polyolefin(e), wie Polyethylen (PE), insbesondere HDPE, LDPE oder LLDPE, und/oder Polypropylen (PP), Polyethylenterephthalat (PET), Polyamid (PA) |
| | Innen-Barriereschicht (55) | Polyamid, insbesondere amorphes und/oder aromatisches und/oder teilaromatisches Polyamid, Ethylenvinylalkoholcopolymer (EVOH), Polyacrylnitril (PAN), Polyethylenterephthalat (PET), Mischungen und Kombinationen vorgenannter Materialien |
| erste Verbindungsschicht (43) | | Maleinsäureanhydrid (MSA), Ethylenmethacrylat (EMA), Ethylenacrylsäure-Copolymere (EAA), Ionomere, Terpolymere (Ethylenacrylsäure-Maleinsäureester-Anhydride), Ethylenvinylacetate (EVA), modifizierte Olefine, Mischungen vorgenannter Materialien |
| zweite Verbindungsschicht (45) | | Maleinsäureanhydrid (MSA), Ethylenmethacrylat (EMA), Ethylenacrylsäure-Copolymere (EAA), Ionomere, Terpolymere (Ethylenacrylsäure-Maleinsäureester-Anhydride), Ethylenvinylacetate (EVA), Polyolefine, insbesondere Polyethylen (PE), Polypropylen (PP), modifizierte Olefine, Mischungen vorgenannter Materialien |
| dritte Verbindungsschicht (47) | | Maleinsäureanhydrid (MSA), Ethylenmethacrylat (EMA), Ethylenacrylsäure-Copolymere (EAA), Ionomere, Terpolymere (Ethylenacrylsäure-Maleinsäureester-Anhydride), Ethylenvinylacetate (EVA), Polyolefine, insbesondere Polyethylen (PE), Polypropylen (PP), modifizierte Olefine, Mischungen vorgenannter Materialien |
| Haftschicht (60) | | Maleinsäureanhydrid (MSA), Ethylenmethacrylat (EMA), Ethylenacrylsäure-Copolymere (EAA), Ionomere, Terpolymere (Ethylenacrylsäure-Maleinsäureester-Anhydride), Ethylenvinylacetate (EVA), modifizierte Olefine, Mischungen vorgenannter Materialien |
| Barriereschicht (50) | | Polyamid, insbesondere amorphes und/oder aromatisches und/oder teilaromatisches Polyamid, Ethylenvinylalkoholcopolymer (EVOH), Polyacrylnitril (PAN), Polyethylenterephthalat (PET), insbesondere orientiertes Polyethylenterephthalat (OPET), Aluminium, SiO_{X}, AlO_{X}, Mischungen und Kombinationen vorgenannter Materialien |
| zusätzliche Barriereschicht (70) | | Polyamid, insbesondere amorphes und/oder aromatisches und/oder teilaromatisches Polyamid, Ethylenvinylalkoholcopolymer (EVOH), Polyacrylnitril (PAN), Polyethylenterephthalat (PET), insbesondere orientiertes Polyethylenterephthalat (OPET), Mischungen und Kombinationen vorgenannter Materialien |

Die jeweiligen Schichtdicken der einzelnen Schichten sind der nachfolgenden Tabelle zu entnehmen:

| Schicht | Schichtdicke | Schichtdicke vorzugsweise | besonders bevorzugte Schichtdicke |
|---|---|---|---|
| Mantelschicht (10) oder Skin-Layer | 0,2µm - 10 µm | 0,8µm - 6 µm | 1 µm -2,5 µm |
| orientierte Polymerschicht (20) | 10 µm -100 µm | 15 µm - 80 µm | 30 µm - 50 µm |
| erste Verbindungsschicht (43) | 5 µm - 140 µm | 8 µm - 95 µm | 10 µm - 50 µm |
| zweite Verbindungsschicht (45) | 5 µm - 140 µm | 8 µm - 95 µm | 10 µm - 50 µm |
| dritte Verbindungsschicht (47) | 5 µm - 140 µm | 8 µm - 95 µm | 10 µm - 50 µm |
| Haftschicht (60) | 1,5µm - 25 µm | 3 µm - 18 µm | 4,5µm - 12 µm |
| Barriereschicht (50) oder zusätzliche Barriereschicht (70) oder Innen-Barriereschicht (55) (nicht im Falle einer Aluminiumfolie, SiO_{X} oder AlO_{X}) | 3 µm - 60 µm | 3,8µm - 40 µm | 4 µm - 28 µm |
| Barriereschicht (50) im Falle einer Aluminiumfolie | 3 µm - 70µm | 5 µm - 40 µm | 8 µm - 15 µm |

Die Dicke der Barriereschichtmaterialien SiO_{X} und AlO_{X} liegt ferner üblicherweise im Bereich einiger Ångström. Diese Barriereschichtmaterialien werden üblicherweise aufgedampft und weisen somit vorteilhafterweise nur eine sehr geringe Schichtdicke auf.

Des Weiteren sei an dieser Stelle nochmals darauf hingewiesen, dass die Mantelschicht differenziert betrachtet werden muss, nämlich dahingehend, dass eine äußere Mantelschicht orientiert und eine innere Mantelschicht nicht oder nur gering orientiert vorliegt.

Durch die mehrschichtige Ausbildung des Zwischenschichtmaterials sowohl für die der Tubeninnenseite zugewandte Seite als auch für die der Tubenaußenseite zugewandte Seite können Materialien kombiniert werden, deren Eigenschaften in unvorhergesehener Weise bei geringen Schichtdicken vorteilhaft zusammenwirken und auf diese Weise ein Zwischenschichtmaterial bieten, das einerseits eine hohe mechanische als auch eine hohe chemische Stabilität aufweist. Insbesondere seien diesbezüglich eine hohe Dehnbarkeit bei gleichzeitig hoher Reiß- und Durchstoßfestigkeit sowie eine hohe Widerstandsfähigkeit gegenüber Diffusion erwähnt.

Hinsichtlich der Materialstärke der ersten, zweiten und dritten Verbindungsschicht hat es sich erfindungsgemäß als besonders vorteilhaft erwiesen, wenn das in diesen Schichten zur Verfügung gestellte Schichtmaterial mit einer ausreichend großen Schichtdicke und thermoplastischen Konsistenz zur Verfügung steht, so dass das Schichtmaterial, das die äußere Zwischenschicht und insbesondere auch die innere Zwischenschicht bildendet, im Zuge eines Siegelvorgangs aus der jeweiligen Zwischenschicht unter Druck- und Wärmeeinwirkung heraus gepresst werden und auf diese Weise eine benachbarte, insbesondere offen liegende, Schnittkante einer Aluminiumschicht überfließen und überdecken kann, so dass die Aluminiumschnittkante wirkungsvoll vor einem Angriff eventueller aggressiver Substanzen, insbesondere aus dem Tubeninneren, geschützt ist.

Dieser Effekt ist insbesondere gegenüber aggressiven Inhaltsstoffen der erfindungsgemäß hergestellten Tube von großem Vorteil. Es ist jedoch ebenso möglich, auf diese Weise die Aluminiumschicht vor Substanzen, die sich außerhalb der Tube befinden, zu schützen. Durch ein derartiges Überschmelzen einer Schnittkante des erfindungsgemäßen Laminats ist es im Übrigen möglich, sämtliche an die Schnittkante angrenzenden Schichten, mit Ausnahme der Schmelzschicht selbst, gegenüber äußeren Einflüssen sowie Einflüssen der Tubeninhaltsstoffe zu schützen.

In diesem Zusammenhang sei ferner erwähnt, dass das innere Zwischenschichtmaterial erfindungsgemäß zumindest genauso dick und/oder genauso vielschichtig wie das jeweils verwendete äußere Zwischenschichtmaterial aufgebaut sein oder mehr und/oder dickere Schichten umfassen kann. Besonders bewährt hat sich hierbei ein zweilagiges äußeres Zwischenschichtmaterial sowie ein zwei- bis dreilagiges inneres Zwischenschichtmaterial. Auf diese Weise ist im Zuge eines Siegelvorgangs zur Erzeugung einer Lap-Seal-Versiegelung zur Bildung eines runden Tubenkörpers ein Aufschmelzen des inneren Zwischenschichtmaterials und des äußeren Zwischenschichtmaterials sowie ein Überschmelzen einer Schnittkante mit diesem aufgeschmolzenen Zwischenschichtmaterial sowohl von innerhalb als auch von außerhalb der Aluminiumschicht des erfindungsgemäßen Laminats möglich.

Durch die Vorsehung der erfindungsgemäßen orientierten coextrudierten äußeren Deckschicht und der nicht, geringer als die äußere Deckschicht oder monoaxial orientierten inneren Deckschicht aus jeweils siegelfähigem Material oder mit wenigstens einem siegelfähigen Skin-Layer, ist darüber hinaus eine gute äußere Stabilität des erfindungsgemäßen Laminats mit einer gleichzeitig guten Siegelfähigkeit sowie eine sich daraus ergebende hohe Stabilität der Siegelungen und somit der daraus hergestellten Tube gegeben.

Erfindungsgemäß kann eine Bedruckung sowohl auf einer der Tubenaußenseite zugewandten äußeren Skin-Layer erfolgen. Darüber hinaus ist es möglich, die der Tubenaußenseite oder der Tubeninnenseite zugewandte innere Mantelschicht bzw. den entsprechenden Skin-Layer auf ihrer dem äußeren Zwischenschichtmaterial zugewandten Seite mittels eines sogenannten "Reverse-Drucks" zu bedrucken. Dies ist möglich, da die zwischen den Skin-Layern angeordnete Polymerschicht erfindungsgemäß transparent ausgebildet sein kann.

Für den Fall, dass die Anwendung eines "Reverse-Drucks" gewünscht ist, ist zwischen der auf der inneren Mantelschicht bzw. dem entsprechenden Skin-Layer angeordneten Farbschicht und dem äußeren Zwischenschichtmaterial bevorzugt eine weitere Haftschicht vorgesehen, um eine gute Haftung der Farbschicht an dem Zwischenschichtmaterial zu gewährleisten.

Durch die Verwendung der erfindungsgemäßen Materialien sowie insbesondere der dargelegten Schichtenfolge, ist es möglich, Schichtdicken in den angegebenen Dickenbereichen zu erzeugen und auf diese Weise eine im Vergleich zum Stand der Technik wesentlich dünnere Laminatdicke zu erreichen, wobei das mehrschichtige Laminat gleichzeitig verbesserte Barriereeigenschaften sowie optimierte mechanische und chemische Eigenschaften aufweist und sich besonders gut zur Herstellung runder Tubenkörper ohne eine wesentliche Tendenz zur Ovalität eignet.

Die Herstellung des erfindungsgemäßen Zwischenschichtmaterials erfolgt durch eine gemeinsame Extrusion der das Zwischenschichtmaterial bildenden Schichten, wobei das Laminat im Zuge einer Tandem-Extrusion hergestellt werden kann, wobei in einem ersten Extrusionsschritt eine Seite der Barriereschicht und in einem zweiten Extrusionsschritt die andere Seite der Barriereschicht beschichtet wird. Diese Extrusionsschritte können als Coextrusionsschritte ausgeführt werden, wobei gleichzeitig ein mehrlagiger Verbund von Schichten extrudiert wird. Sofern die Barriereschicht extrudierbar ist, wie beispielsweise EVOH, kann diese auch gemeinsam mit dem Zwischenschichtmaterial extrudiert werden.

Ferner umfasst die Erfindung auch ein Verfahren zum Herstellen eines mehrschichtigen Laminats für Tuben mit eingebetteter Aluminiumschicht, wobei die Aluminiumschicht beidseitig mit Zwischenschichtmaterial sowie mit einer äußeren orientierten coextrudierten Deckschicht einerseits und andererseits mit einer nicht, geringer als die äußere Deckschicht oder monoaxial orientierten inneren Deckschicht beschichtet wird. Die orientierte coextrudierte äußere Deckschicht wird ihrerseits durch zumindest einseitiges Beschichten, insbesondere Coextrudieren, der Polymerschicht mit einem Skin-Layer hergestellt. Vorzugsweise wird die Polymerschicht beiderseits mit einem, vorzugsweise identischen, Skin-Layer beschichtet. Nach einem Beschichten der Polymerschicht mit dem jeweils zugeordneten Skin-Layer wird die sich hieraus ergebende äußere Deckschicht, insbesondere biaxial, gereckt. Die nicht orientierte innere Deckschicht kann ebenfalls durch Coextrudieren hergestellt werden, sofern diese mehrschichtig ausgebildet werden soll. Ferner ist eine Herstellung der inneren Deckschicht als Blasfolie möglich, wobei eine im Wesentlichen monoaxiale Dehnung der Folie im Zuge des Aufblasens erfolgt.

Ferner werden die das Zwischenschichtmaterial bildenden Schichten coextrudiert und im Wesentlichen simultan oder unmittelbar aufeinanderfolgend unter Ausbildung des Laminats extrudiert.

Zusammenfassend kann somit festgehalten werden, dass die wesentliche erfinderische Gedanke darauf basiert, dass die Erfinder in überraschender Weise herausgefunden haben, dass sich ein Laminat besonders gut zu einem runden Folienkörper formen lässt, wenn eine, das Laminat zu einer Seite begrenzende, äußere Deckschicht orientiert, insbesondere biaxial orientiert ist und aus einer Zentralschicht, die eine Polymerschicht sein kann, und vorzugsweise zwei Skin-Layern besteht, welche die zentrale Polamerschicht umgeben, wobei die Polymerschicht zusammen mit den beidseitig auf diese aufgebrachten Skin-Layern orientiert, d.h. gereckt wird.

Diese orientierte Polymerschicht zusammen mit den orientierten Skin-Layern stellt hierbei die äußere Deckschicht dar, die in Zusammenwirkung mit einer weiteren, das Laminat zur anderen Seite hin begrenzenden, inneren nicht, geringer als die äußere Deckschicht oder monoaxial orientierten inneren Deckschicht die hier wesentlichen vorteilhaften Eigenschaften zur Ausprägung bringt, die es ermöglichen, einen Tubenkörper herzustellen, der rund, und nicht wie bisher im Stand der Technik oval, ausgebildet ist, da durch den Einsatz der erfindungsgemäßen inneren nicht orientierten Deckschicht in äußerst vorteilhafter Weise ein Schrumpfprozess vermieden oder, je nach Reck- oder Orientierungsgrad und/oder -richtung dezidiert "eingestellt" werden kann, der bei Folien gemäß dem Stand der Technik im Zuge einer Lap-Seal-Versiegelung bisheriger Laminate unkontrolliert und in ungewollt hohem Maße auftrat, wenn diese bisherigen Laminate zu einem Tubenkörper geformt wurden.

Im Übrigen wird die erfindungsgemäße Aufgabe auch durch eine Tube gelöst, die aus einem Laminat gemäß den vorstehenden Ausführungen hergestellt ist, sowie ferner durch die Verwendung eines vorbeschriebenen Laminats zum Herstellen einer Verpackung mit röhrenförmigem Körper, nämlich einer Tube.

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden. Dabei zeigen:
- Fig. 1: eine schematische Darstellung einer ersten Ausführungsform eines erfindungsgemäßen Laminats;
- Fig. 2: eine schematische Darstellung einer zweiten Ausführungsform eines erfindungsgemäßen Laminats;
- Fig. 3: eine schematische Darstellung einer dritten Ausführungsform eines erfindungsgemäßen Laminats;
- Fig. 4: eine schematische Darstellung einer weiteren Ausführungsform eines erfindungsgemäßen Laminats;
- Fig. 5 bis 7: schematische Darstellungen weiterer Ausführungsformen erfindungsgemäßer Laminate in Anlehnung an die Ausführungsformen gemäß Fig. 1, Fig. 2 und Fig. 4, jedoch mit zusätzlicher Barriereschicht;
- Fig. 8 und 9: schematische Darstellungen weiterer Ausführungsformen erfindungsgemäßer Laminate; und
- Fig. 10 bis 12: schematische Darstellungen unterschiedlicher Barriereschichtverbünde, die erfindungsgemäß als eingebettete Barriereschicht und/oder zusätzliche Barriereschicht und/oder Innen-Barriereschicht eingesetzt werden können.

In der nachfolgenden Beschreibung werden für gleiche und gleich wirkende Teile dieselben Bezugsziffern verwendet.

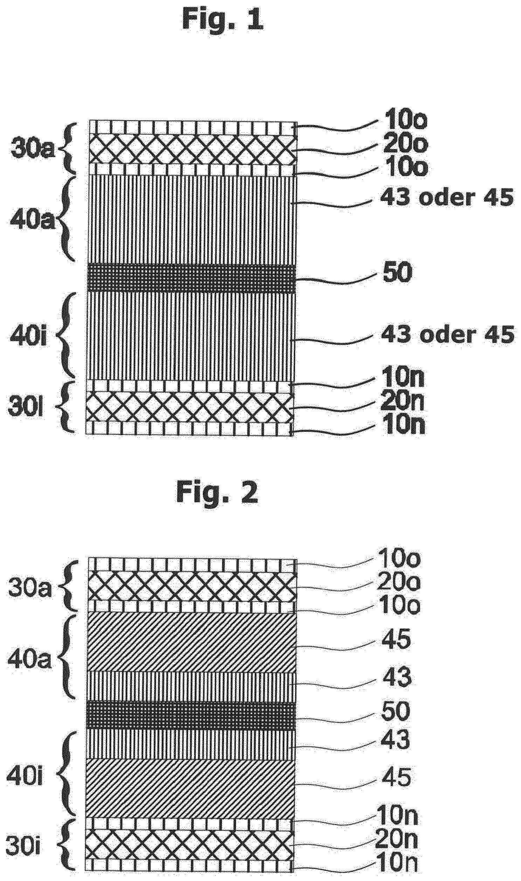

Fig. 1 zeigt eine schematische Darstellung der einfachsten Form eines erfindungsgemäßen Laminats, wobei eine Aluminiumschicht 50 in Richtung einer, im Falle der vorgesehenen Bildung einer Tube, Außenseite einer solchen Tube mit einer äußeren Zwischenmaterialschicht 40a beschichtet ist, an die sich eine coextrudierte Deckschicht 30a anschließt, die ihrerseits aus einer zentralen orientierten Polymerschicht 20o besteht, die beiderseits von ebenfalls orientierten Skin-Layern 10o bedeckt ist. In Richtung einer gedachten Tubeninnenseite schließt sich an die Aluminiumschicht 50 ein inneres Zwischenschichtmaterial 40i an, das wiederum an einen nicht orientierte Skin-Layer 10n angrenzt, der seinerseits benachbart zu einer nicht orientierten Polymerschicht 20n angeordnet ist. Als an diese Polymerschicht 20n angrenzende Schicht ist wiederum ein nicht orientierter Skin-Layer 10n vorgesehen. Somit ist dieses erfindungsgemäße Laminat bezüglich der Aluminiumschicht 50 hinsichtlich der jeweils angeordneten Schichten, nämlich insbesondere hinsichtlich der molekularen Orientierung der jeweiligen äußeren und inneren Deckschicht, asymmetrisch aufgebaut. Die Aluminiumschicht weist gemäß dieser Ausführungsform eine Schichtdicke von 12 µm auf, während das äußere Zwischenschichtmaterial 40a eine Schichtdicke von 40 µm aufweist. Das innere Zwischenschichtmaterial 40i hat eine Dicke von 50 µm. Die außen liegende coextrudierte Deckschicht 30a und die innere Deckschicht 30i haben jeweils eine Schichtdicke von 30 µm, wobei auf die orientierte sowie die nicht orientierte Polymerschicht 20o und 20n 22 µm und auf die jeweiligen Skin-Layer 10o und 10n jeweils 2 bis 4 µm entfallen.

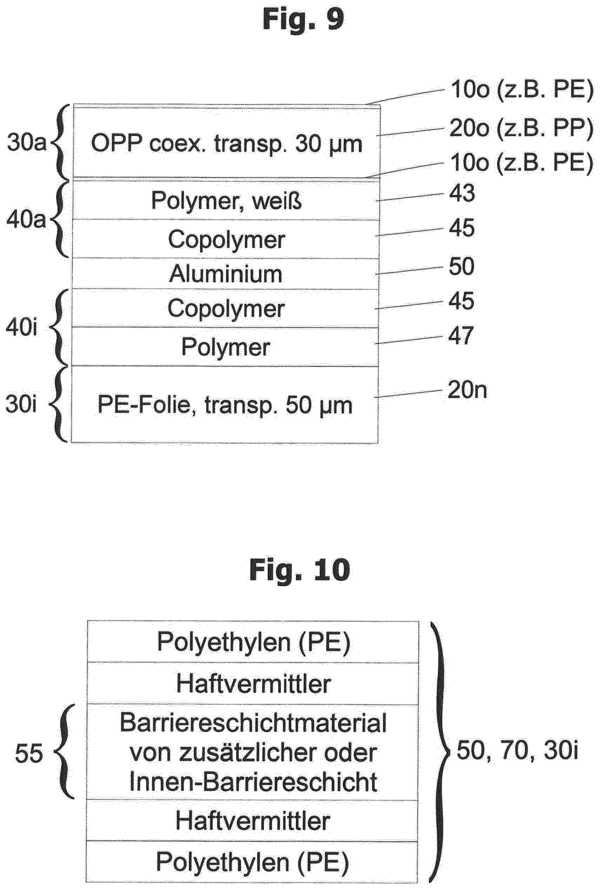

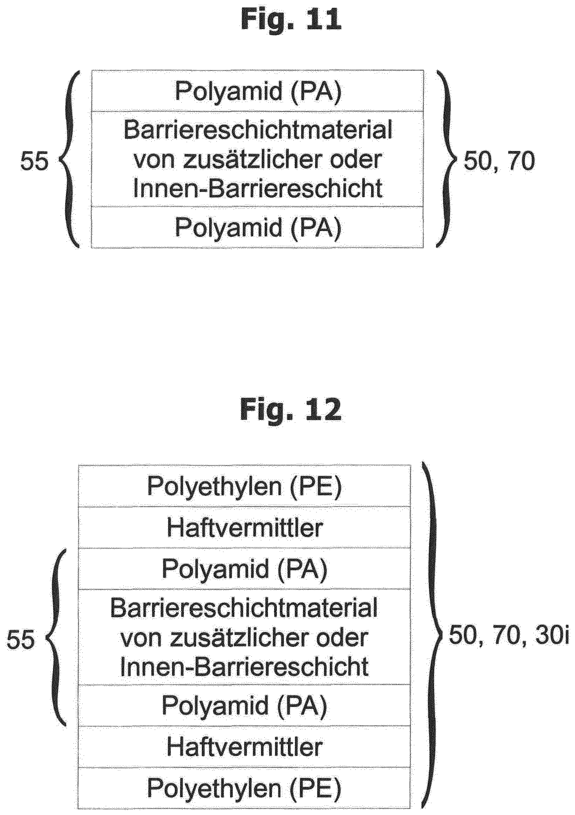

Gemäß einer weiteren Ausführungsform der Erfindung kann bei dem erfindungsgemäßen Laminat gemäß Fig. 1 die innere Deckschicht 30i alternativ zur vorbeschriebenen Ausführungsform gemäß Fig. 1 auch gemäß den nachfolgend beschriebenen Figuren 10 oder 12 aufgebaut sein, wobei die innere Deckschicht auch in diesen Fällen nicht oder nicht wesentlich orientiert ist.

Fig. 2 unterscheidet sich von Fig. 1 dahingehend, dass die äußeren und die inneren Zwischenschichtmaterialien 40a und 40i nicht nur aus einer ersten Verbindungsschicht 43 bestehen, sondern sowohl das äußere Zwischenschichtmaterial 40a als auch das innere Zwischenschichtmaterial 40i aus einer ersten Verbindungsschicht 43 und einer zweiten Verbindungsschicht 45 dargestellt sind. Hierbei weist die zweite Verbindungsschicht 45 jeweils 34 µm Schichtdicke auf, während die beiden ersten Verbindungsschichten 43 eine Schichtdicke von jeweils 14 µm haben. Auch in diesem Fall kann die innere Deckschicht 30i alternativ zur vorbeschriebenen Ausführungsform gemäß Fig. 2 auch gemäß den nachfolgend beschriebenen Figuren 10 oder 12 aufgebaut sein, wobei die innere Deckschicht auch in diesen Fällen nicht oder nicht wesentlich orientiert ist.

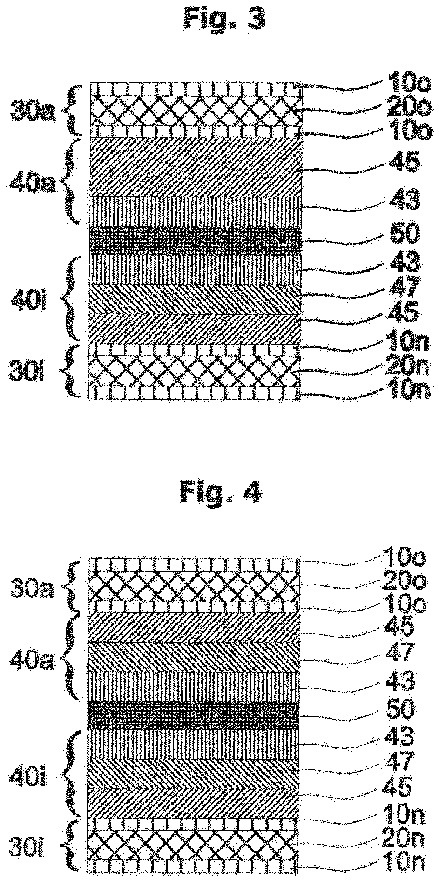

Gemäß Fig. 3 ist das innere Zwischenschichtmaterial 40i nochmals untergliedert in eine erste Verbindungsschicht 43 mit einer Schichtdicke von 14 µm, eine zweite Verbindungsschicht 45 mit einer Schichtdicke von 17 µm und eine dritte Verbindungsschicht 47 mit einer Schichtdicke von 30 µm. Somit ergibt sich für das innere Zwischenschichtmaterial 40i eine gesamte Schichtdicke von nur 65 µm, was zu einer deutlich verbesserten Flexibilität des erfindungsgemäßen Laminats als auch zu einer besseren Siegelbarkeit bei gleichzeitig sehr hoher Barriereeigenschaft beiträgt. Auch in diesem Fall kann die innere Deckschicht 30i alternativ zur vorbeschriebenen Ausführungsform gemäß Fig. 3 auch gemäß den nachfolgend beschriebenen Figuren 10 oder 12 aufgebaut sein, wobei die innere Deckschicht auch in diesen Fällen nicht oder nicht wesentlich orientiert ist.

Die Ausführungsform gemäß Fig. 4 entspricht im Wesentlichen der Ausführungsform gemäß Fig. 3 mit dem Unterschied, dass auch die äußere Zwischenmaterialschicht 40a dreilagig aus einer ersten Verbindungsschicht 43, einer zweiten Verbindungsschicht 45 und einer dritten Verbindungsschicht 47 hergestellt ist. Auch in diesem Fall kann die innere Deckschicht 30i alternativ zur vorbeschriebenen Ausführungsform gemäß Fig. 4 auch gemäß den nachfolgend beschriebenen Figuren 10 oder 12 aufgebaut sein, wobei die innere Deckschicht auch in diesen Fällen nicht oder nicht wesentlich orientiert ist.

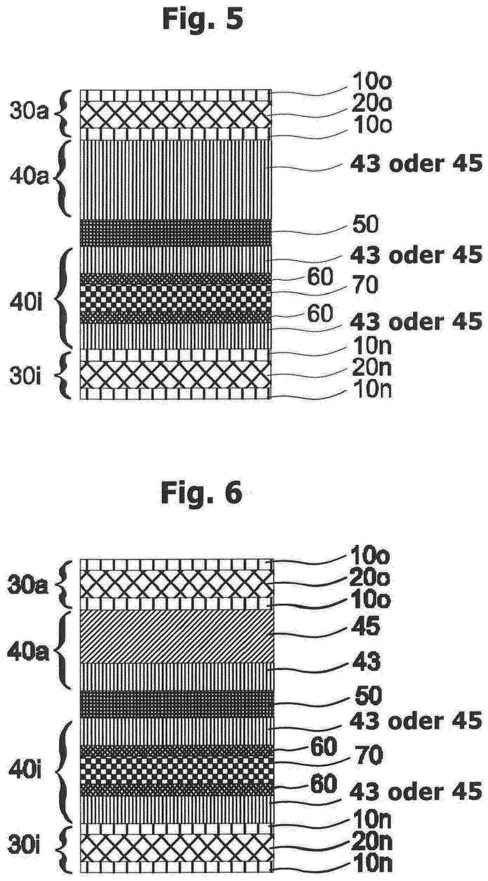

Die Fig. 5, 6 und 7 entsprechen hinsichtlich ihres bezüglich der Aluminiumschicht 50 äußeren Aufbaus den Ausführungsformen gemäß den Fig. 1, 2 und 4. Der innere Aufbau des Laminats ist dahingehend abgewandelt, dass in eine das innere Zwischenschichtmaterial 40i bildende erste oder zweite Verbindungsschicht 43, 45 eine zusätzliche Barriereschicht 70 integriert ist, die beidseitig von einer Haftschicht 60 umgeben ist.

Bei einem Laminataufbau gemäß den Figuren 5 bis 7 ist es erfindungsgemäß möglich, dass das innere Zwischenschichtmaterial 40i die innere Deckschicht 30i bildet, so dass in diesem Fall die innere Deckschicht 30i unmittelbar oder gegebenenfalls über einen Haftvermittler oder Kaschierkleber an die eingebettete Barriereschicht 50 angrenzt. Ferner ist es auch im Fall eines Laminataufbaus gemäß den Figuren 5 bis 7 möglich, dass die innere Deckschicht 30i alternativ zu den vorbeschriebenen abgebildeten Ausführungsformen gemäß den Figuren 5 bis 7 entsprechend zu den nachfolgend beschriebenen Figuren 10 oder 12 aufgebaut ist, wobei die innere Deckschicht auch in diesen Fällen nicht oder nicht wesentlich orientiert ist.

Im Übrigen sei darauf hingewisen, dass die eingebettete Barriereschicht 50 gemäß den Figuren 1 bis 7 zwar beispielhaft als Aluminiumschicht bezeichnet wurde, die eingebettete Barriereschicht 50 jedoch nach Bedarf, beispielsweise zur Erzeugung eines durchsichtigen Laminats, auch aus einem oder mehreren Kunststoffmaterial(ien) gemäß vorstehenden Ausführungen bestehen kann. In diesem Fall weist die eingebettete Barriereschicht 50 eine Schichtdicke im Bereich von 3,8 µm bis 40 µm, vorzugsweise im Bereich von 4 µm bis 28 µm, auf. Im Falle einer Verwendung von Aluminium als Barriereschichtmaterial für die eingebettete Barriereschicht 50 wird ein undurchsichtiges erfindungsgemäßes Laminat erhalten.

Ergänzend sei erwähnt, dass sowohl die eingebettete Barriereschicht 50, als auch die zusätzliche Barriereschicht 70, als auch die Innen-Barriereschicht 55 durch Barriereschichtverbünde gemäß den Figuren 10 bis 12 gebildet sein können.

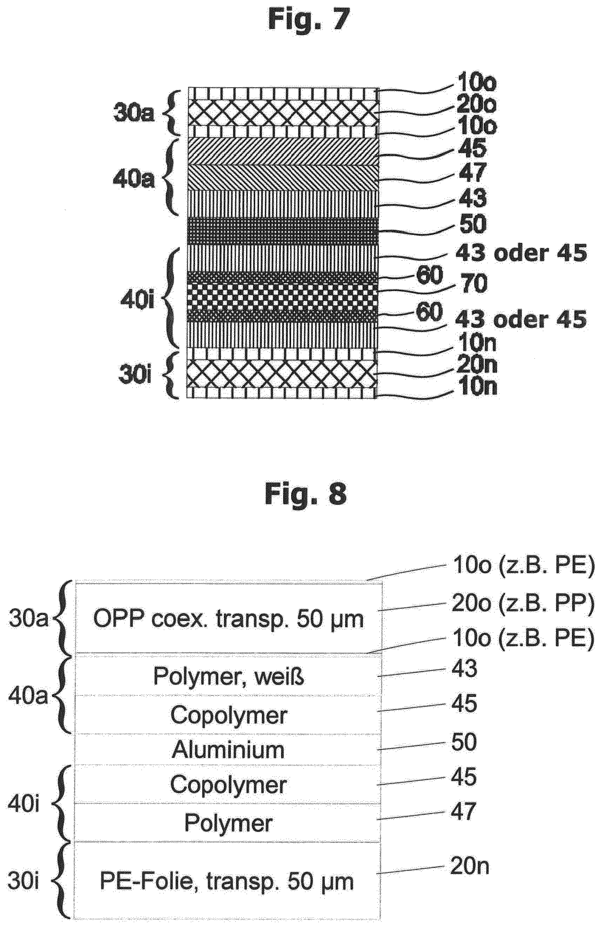

Fig. 8 zeigt eine weitere schematische Darstellung eines erfindungsgemäßen mehrschichtigen Laminats für Tuben mit eingebetteter Aluminiumschicht 50. Die Aluminiumschicht 50 ist gemäß Fig. 8 beidseitig von einer zweiten Verbindungsschicht 45 aus einem Copolymer umgeben. Das Copolymer der zweiten Verbindungsschicht 45 bildet in Richtung der coextrudierten orientierten äußeren Deckschicht 30a zusammen mit einer ersten Verbindungsschicht 43 ein äußeres Zwischenschichtmaterial 40a, über welches die Aluminiumschicht 50 mit der coextrudierten orientierten äußeren Deckschicht 30a verbunden ist. Die coextrudierte orientierte äußere Deckschicht 30a setzt sich wiederum aus einer zentralen orientierten Polymerschicht 20o sowie beidseitig an diese orientierte Polymerschicht 20o verbundenen orientierten Skin-Layern 10o zusammen. Die coextrudierte orientierte äußere Deckschicht ist hierbei durch Coextrusion der orientierten Polymerschicht 20o und den beiden orientierten Skin-Layern 10o hergestellt, wobei die orientierte Polymerschicht 20o aus einem transparenten biaxial orientierten Polypropylen mit einer Schichtdicke von 50 µm besteht.

Auf der der coextrudierten orientierten äußeren Deckschicht 30a abgewandten Seite der Aluminiumschicht 50 schließt sich an diese ein inneres Zwischenschichtmaterial 40i an, das, wie vorerwähnt, aus einer zweiten Verbindungsschicht 45 aus einem Copolymer sowie einer dritten Verbindungsschicht 47 aus einem Polymer besteht. Die Aluminiumschicht 50 ist ihrerseits durch das innere Zwischenschichtmaterial 40i mit einer nicht orientierten inneren Deckschicht 30i verbunden. Diese nicht orientierte innere Deckschicht 30i wird durch eine transparente Monofolie in Form einer Polyethylenfolie mit einer Schichtdicke von 50 µm gebildet. Diese Polyethylenfolie ist mit dem Bezugszeichen 20n gekennzeichnet. Bei den beiden Verbindungsschichten, welche das äußere Zwischenschichtmaterial 40a bilden, handelt es sich um ein weißes Polyethylen mit einer Schichtdicke von 20 µm. Dieses weiße Polyethylen stellt die erste Verbindungsschicht 43 dar. Das sich an diese erste Verbindungsschicht anschließende, die zweite Verbindungsschicht 45 bildende Copolymer ist ebenfalls weiß, d.h. undurchsichtig, ausgebildet und hat eine Schichtdicke von 15 µm. Die Aluminiumschicht 50 weist eine Schichtdicke von 12 µm auf, während das die zweite Verbindungsschicht 45 bildende Copolymer des inneren Zwischenschichtmaterials 40i eine Schichtdicke von 17 µm aufweist. Dieses Copolymer ist transparent ausgebildet. Bei der sich an das Copolymer der zweiten Verbindungsschicht 45 anschließenden dritten Verbindungsschicht 47 handelt es sich um ein Polyethylencopolymer, das transparent ist und eine Schichtdicke von 20 µm hat.

Fig. 9 zeigt ebenfalls eine schematische Darstellung einer weiteren Ausführungsform eines erfindungsgemäßen mehrschichtigen Laminats für Tuben mit eingebetteter Aluminiumschicht 50. Der Schichtaufbau des in Fig. 9 dargestellten Laminats entspricht im Wesentlichen demjenigen aus Fig. 8, mit dem Unterschied, dass die orientierte Polymerschicht 20o der coextrudierten orientierten äußeren Deckschicht 30a gemäß Fig. 9 lediglich eine Schichtdicke von 30 µm auf. Auch die angrenzende Schicht aus weißem Polyethylen, welche die erste Verbindungsschicht 43 des äußeren Zwischenschichtmaterials 40a bildet, hat eine Schichtdicke von 18 µm. Die Schichtdicke des sich anschließenden Copolymers, welches die zweite Verbindungsschicht 45 bildet, liegt bei 15 µm. Die Schichtdicke der Aluminiumschicht 50 liegt im Bereich von 9 µm. Bei der Polymerschicht, welche die dritte Verbindungsschicht 47 des inneren Zwischenschichtmaterials 40i bildet, handelt es sich wiederum um ein Polyethylencopolymer, das ebenso wie das angrenzende Copolymer transparent ausgebildet ist. Die Polyethylencopolymerschicht weist eine Schichtdicke von 23 µm auf.

Die weiteren Figuren 10 bis 12 zeigen ferner, jeweils in schematischer Darstellung, unterschiedliche Aufbauten für eine eingebettete Barriereschicht 50, eine zusätzliche Barriereschicht 70 oder eine Innen-Barriereschicht 55. Es sei hiermit explizit darauf hingewiesen, dass vorgenannte Beispiele jeweils eine Aluminiumschicht als Barriereschichtmaterial für die eingebettete Barriereschicht 50 genannt haben. Diese Aluminiumschicht kann jedoch durch eine Schicht aus Ethlyenvinylalkoholcopolymer (EVOH) oder eine andere organische Barriereschicht sowie eine Kombination der jeweils erörterten Kunststoffbarriereschichtmaterialien ersetzt werden. Diese Kunststoffbarriereschichtmaterialien können ferner auch für die zusätzliche Barriereschicht 70 und/oder die Innen-Barriereschicht 55 verwendet werden. Darüber hinaus können beispielsweise alternativ zu einer Monoschicht aus EVOH können auch die in den Fig. 10 bis 12 dargestellten Barriereschichtverbünde eingesetzt werden. Diese sind in vorteilhafter Weise bereits als fertiger Verbund erhältlich und können auf diese Weise äußerst einfach in das erfindungsgemäße mehrschichtige Laminat integriert werden. In diesem Zusammenhang sei ferner darauf hingewiesen, dass die gezeigten Verbünde auch mit den Barriereschichtmaterialien, wie beispielsweise Polyethylenterephthalat, Polyacrylnitril oder Siliziumoxid oder Aluminiumoxid kombiniert werden können, sofern dies gewünscht oder erforderlich ist.
Hinsichtlich der Wahl des jeweiligen Barriereschichtmaterials sei ferner erwähnt, dass eine Barriereschicht aus Aluminium vorzugsweise dann eingesetzt wird, wenn ein undurchsichtiges mehrschichtiges Laminat erzeugt werden soll oder gewünscht ist. Die auf Polymeren basierenden Barriereschichten, wie sie in den Fig. 10 bis 12 dargestellt sind, werden dem gegenüber vorzugsweise für mehrschichtige Laminate eingesetzt, die durchsichtig sein sollen, beispielsweise dann, wenn es erwünscht ist, dass die Füllung einer Tube von außen sichtbar ist.
Somit ist das erfindungsgemäße mehrschichtige Laminat sowie eine daraus hergestellte Tube äußerst vielseitig einsetzbar und weist gegenüber bisherigen Laminaten für Tuben erhebliche Vorteile und Verbesserungen, insbesondere im Hinblick auf fertigungstechnische Möglichkeiten, als auch im Hinblick auf Barriereeigenschaften auf.
Als Materialien für die angegebenen Schichten kommen die vorgenannten Materialien in Betracht, wobei betont sei, dass benachbarte Schichten vorzugsweise unterschiedlicher Art sind.

### Bezugszeichenliste

- 10o: orientierter Skin-Layer
- 10n: nicht orientierter Skin-Layer
- 20o: orientierte Polymerschicht
- 20n: nicht orientierte Polymerschicht
- 30a: coextrudierte orientierte äußere Deckschicht
- 30i: nicht orientierte innere Deckschicht
- 40a: äußeres Zwischenschichtmaterial
- 40i: inneres Zwischenschichtmaterial
- 43: 1. Verbindungsschicht
- 45: 2. Verbindungsschicht
- 47: 3. Verbindungsschicht
- 50: eingebettete Barriereschicht
- 55: Innen-Barriereschicht
- 60: Haftschicht
- 70: zusätzliche Barriereschicht

## Patentansprüche

1. Mehrschichtiges Laminat für Tuben mit eingebetteter Barriereschicht (50), wobei das Laminat eine das Laminat zu einer Seite begrenzende äußere Deckschicht (30a) sowie eine das Laminat zur anderen Seite begrenzende innere Deckschicht (30i) aufweist, zwischen welchen die Barriereschicht (50) angeordnet ist, wobei das Laminat bezüglich der Barriereschicht (50), im Hinblick auf die Deckschichten (30a, 30i), eine asymmetrische Struktur hat, wobei sich eine Molekular-Orientierung der inneren Deckschicht (30i) von einer Molekular-Orientierung der äußeren Deckschicht (30a), jeweils bezogen auf eine Dehnung oder Reckung in Maschinenrichtung (MD) sowie quer zu der Maschinenrichtung (CD) unterscheidet und wobei die äußere Deckschicht (30a) eine biaxiale Orientierung mit einer Reckung in Maschinenrichtung (MD) von 200% bis 800%, vorzugsweise von 400% bis 600% und besonders bevorzugt von im Wesentlichen 500% sowie quer zur Maschinenrichtung (CD) von 500% bis 1300%, vorzugsweise von 700% bis 900% und besonders bevorzugt von im Wesentlichen 800% aufweist und die innere Deckschicht (30i) keine oder eine monoaxiale Orientierung aufweist.

2. Mehrschichtiges Laminat nach Anspruch 1,
**dadurch gekennzeichnet, dass**
die äußere Deckschicht (30a) über ein äußeres Zwischenschichtmaterial (40a), vorzugsweise unmittelbar, mit der Barriereschicht (50) und die innere Deckschicht (30i) über ein inneres Zwischenschichtmaterial (40i), vorzugsweise unmittelbar, mit der Barriereschicht (50) verbunden sind.

3. Mehrschichtiges Laminat nach einem der vorhergehenden Ansprüche,
**dadurch gekennzeichnet, dass**
die äußere Deckschicht (30a) zumindest zweilagig ist und wenigstens eine Polymerschicht (20) sowie wenigstens eine Mantelschicht (10) in Form eines Skin-Layers, vorzugsweise beidseitig der Polymerschicht (20) jeweils eine, insbesondere im Wesentlichen in Bezug auf Dicke und Material gleichartige, Mantelschicht (10), jeweils in Form eines Skin-Layers, umfaßt, und vorzugsweise coextrudiert und anschließend gereckt ist.

4. Mehrschichtiges Laminat nach einem der vorhergehenden Ansprüche,
**dadurch gekennzeichnet, dass**
die innere Deckschicht (30i) als Monofolie oder als, insbesondere coextrudierte, vorzugsweise zwei- oder dreilagige, Mehrschichtfolie ausgebildet ist, wobei die Monofolie insbesondere eine Polymerschicht (20) ist oder wobei die Mehrschichtfolie eine Polymerschicht (20) aufweist, die zumindest einseitig, vorzugsweise beidseitig, eine oder mehrere, insbesondere im Wesentlichen identische, Mantelschicht(en) (10) in Form jeweiliger Skin-Layern umfaßt, die vorzugsweise bezüglich der Polymerschicht (20) symmetrisch angeordnet sind oder wobei die Mehrschichtfolie eine, vorzugsweise zentrale, Innen-Barriereschicht (55) aufweist, die beidseitig, und vorzugsweise bezüglich der Innen-Barriereschicht (55) symmetrisch, von jeweils von einer, insbesondere im Wesentlichen identischen, Mantelschicht (10), beispielsweise in Form eines Skin-Layers, umgeben ist, wobei zwischen der Innen-Barriereschicht (55) und dem jeweiligen Skin-Layer (10) gegebenenfalls ein Haftvermittler oder Klebstoff, insbesondere ein Kaschierklebstoff, vorgesehen ist.

5. Mehrschichtiges Laminat nach einem der vorhergehenden Ansprüche 2 bis 4, **dadurch gekennzeichnet, dass**
eine Dicke der Polymerschicht (20) ein 6- bis 100-faches, bevorzugt ein 14- bis 81-faches und besonders bevorzugt ein 50- bis 70-faches der Dicke der Mantelschicht (10), insbesondere des Skin-Layers, ist.

6. Mehrschichtiges Laminat nach einem der vorhergehenden Ansprüche,
**dadurch gekennzeichnet, dass**
die innere Deckschicht (30i) eine Blasfolie mit einem Aufblasverhältnis in Maschinenrichtung (MD) : quer zur Maschinenrichtung (CD) im Bereich von 1 : 1 bis 1 : 2,5, vorzugsweise im Bereich von 1 : 1,05 bis 1 : 1,75 und besonders bevorzugt im Bereich von 1 : 1,2 bis 1 : 1,9 ist.

7. Mehrschichtiges Laminat nach einem der vorhergehenden Ansprüche 2 bis 6,
**dadurch gekennzeichnet, dass**
das äußere Zwischenschichtmaterial (40a) wenigstens einlagig, bevorzugt mehrlagig, insbesondere ein- bis dreilagig, besonders bevorzugt zweilagig, ist und eine erste (43) und/oder eine zweite (45) und/oder eine dritte Verbindungsschicht (47) aufweist.

8. Mehrschichtiges Laminat nach einem der vorhergehenden Ansprüche 2 bis 7,
**dadurch gekennzeichnet, dass**
das innere Zwischenschichtmaterial (40i) wenigstens einlagig, bevorzugt mehrlagig, insbesondere ein- bis fünflagig ist, wobei ein bis drei Lagen davon alternativ oder in Kombination die erste (43) und/oder die zweite (45) und/oder die dritte Verbindungsschicht (47) sind.

9. Mehrschichtiges Laminat nach einem der vorhergehenden Ansprüche 2 bis 8,
**dadurch gekennzeichnet, dass**
das innere Zwischenschichtmaterial (40i) wenigstens eine zusätzliche Barriereschicht (70) umfaßt, die gegebenenfalls zumindest einseitig eine Haft- oder Haftvermittlungsschicht oder Klebstoffschicht (60) aufweist.

10. Mehrschichtiges Laminat nach einem der vorhergehenden Ansprüche,
**dadurch gekennzeichnet, dass**
die jeweiligen Schichten Materialien gemäß nachfolgender Tabelle jeweils allein oder in Kombination aufweisen:
| Schicht | | Material(ien) |
|---|---|---|
| äußere Deckschicht (30a) | Mantelschicht (10o) oder Skin-Layer | Polyolefin(e), wie Polyethylen (PE), insbesondere HDPE, LDPE oder LLDPE, und/oder Polypropylen (PP), Polyethylenterephthalat (PETP), Polyethylenterephthalatglykol (PETG), Mischungen vorgenannter Materialien |
| | Polymerschicht (20o) | Polyolefin(e), wie Polyethylen (PE), insbesondere HDPE, LDPE oder LLDPE, und/oder Polypropylen (PP), Polyethylenterephtalat (PET), Polyamid (PA) |
| innere Deckschicht (30i) | Mantelschicht (10n) oder Skin-Layer | Polyolefin(e), wie Polyethylen (PE), insbesondere HDPE, LDPE oder LLDPE, und/oder Polypropylen (PP), Polyethylenterephthalat (PETP), Polyethylenterephthalatglykol (PETG), Mischungen vorgenannter Materialien |
| | Polymerschicht (20n) | Polyolefin(e), wie Polyethylen (PE), insbesondere HDPE, LDPE oder LLDPE, und/oder Polypropylen (PP), Polyethylenterephtalat (PET), Polyamid (PA) |
| | Innen-Barriereschicht (55) | Polyamid, insbesondere amorphes und/oder aromatisches und/oder teilaromatisches Polyamid, Ethylenvinylalkoholcopolymer (EVOH), Polyacrylnitril (PAN), Polyethylenterephthalat (PET), Mischungen vorgenannter Materialien |
| erste Verbindungsschicht (43) | | Maleinsäureanhydrid (MSA), Ethylenmethacrylat (EMA), Ethylenacrylsäure-Copolymere (EAA), Ionomere, Terpolymere (Ethylenacrylsäure-Maleinsäureester-Anhydride), Ethylenvinylacetate (EVA), modifizierte Olefine, Mischungen vorgenannter Materialien |
| zweite Verbindungsschicht (45) | | Maleinsäureanhydrid (MSA), Ethylenmethacrylat (EMA), Ethylenacrylsäure-Copolymere (EAA), Ionomere, Terpolymere (Ethylenacrylsäure-Maleinsäureester-Anhydride), Ethylenvinylacetate (EVA), Polyolefine, insbesondere Polyethylen (PE), Polypropylen (PP), modifizierte Olefine, Mischungen vorgenannter Materialien |
| dritte Verbindungsschicht (47) | | Maleinsäureanhydrid (MSA), Ethylenmethacrylat (EMA), Ethylenacrylsäure-Copolymere (EAA), Ionomere, Terpolymere (Ethylenacrylsäure-Maleinsäureester-Anhydride), Ethylenvinylacetate (EVA), Polyolefine, insbesondere Polyethylen (PE), Polypropylen (PP), modifizierte Olefine, Mischungen vorgenannter Materialien |
| Haft- oder Haftvermittlungsschicht (60) | | Maleinsäureanhydrid (MSA), Ethylenmethacrylat (EMA), Ethylenacrylsäure-Copolymere (EAA), Ionomere, Terpolymere (Ethylenacrylsäure-Maleinsäureester-Anhydride), Ethylenvinylacetate (EVA), modifizierte Olefine, Mischungen vorgenannter Materialien |
| Barriereschicht (50) | | Polyamid, insbesondere amorphes und/oder aromatisches und/oder teilaromatisches Polyamid, Ethylenvinylalkoholcopolymer (EVOH), Polyacrylnitril (PAN), Polyethylenterephthalat (PET), insbesondere orientiertes Polyethylenterephthalat (OPET), Aluminium, SiO_{X}, AlO_{X}, Mischungen vorgenannter Materialien |
| zusätzliche Barriereschicht (70) | | Polyamid, insbesondere amorphes und/oder aromatisches und/oder teilaromatisches Polyamid, Ethylenvinylalkoholcopolymer (EVOH), Polyacrylnitril (PAN), Polyethylenterephthalat (PET), insbesondere orientiertes Polyethylenterephthalat (OPET), Mischungen vorgenannter Materialien |

11. Mehrschichtiges Laminat nach einem der vorhergehenden Ansprüche, **dadurch gekennzeichnet, dass** die jeweiligen Schichten eine Dicke gemäß der nachfolgenden Tabelle aufweisen:
| Schicht | Schichtdicke | Schichtdicke vorzugsweise | besonders bevorzugte Schichtdicke |
|---|---|---|---|
| Mantelschicht (10) oder Skin-Layer | 0,2 µm - 10 µm | 0,8 µm - 6 µm | 1 µm - 2,5 µm |
| orientierte Polymerschicht (20) | 10 µm -100 µm | 15 µm - 80 µm | 30 µm - 50 µm |
| erste Verbindungsschicht (43) | 5 µm - 140 µm | 8 µm - 95 µm | 10 µm - 50 µm |
| zweite Verbindungsschicht (45) | 5 µm -140 µm | 8 µm - 95 µm | 10 µm - 50 µm |
| dritte Verbindungsschicht (47) | 5 µm -140 µm | 8 µm - 95 µm | 10 µm - 50 µm |
| Haft- oder Haftvermittlungsschicht (60) | 1,5 µm - 25 µm | 3 µm - 18 µm | 4,5 µm - 12 µm |
| Barriereschicht (50) oder zusätzliche Barriereschicht (70) oder Innen-Barriereschicht (55) | 3 µm - 60 µm | 3,8 µm - 40 µm | 4 µm - 28 µm |
| (nicht im Falle einer Aluminiumfolie, SiO_{X} oder AlO_{X}) | | | |
| Barriereschicht (50) im Falle einer Aluminiumfolie | 3 µm - 70 µm | 5 µm - 40 µm | 8 µm - 15 µm |

12. Tube, hergestellt aus einem Laminat gemäß einem der vorhergehenden Ansprüche.

13. Verwendung eines Laminats gemäß einem der vorhergehenden Ansprüche 1 bis 11 zum Herstellen einer Verpackung, insbesondere einer Schlauchbeutelverpackung oder einer Tube.

## Claims

1. A multilayer laminate for tubes with an embedded barrier layer (50), wherein the laminate has an outer cover layer (30a) bordering the laminate on one side and an inner cover layer (30i) bordering the laminate on the other side, with the barrier layer (50) being arranged between them, wherein the laminate has an asymmetrical structure with respect to the barrier layer (50) and with respect to the cover layers (30a, 30i), and the molecular orientation of the inner cover layer (30i) is different from the molecular orientation of the outer cover layer (30a), each based on the elongation or drawing in the machine direction (MD) as well as crosswise to the machine direction (CD), and wherein the outer cover layer (30a) has a biaxial orientation with 200% to 800% drawing in the machine direction (MD), preferably 400% to 600%, and especially preferably essentially 500% as well as 500% to 1300% crosswise to the machine direction (CD), preferably 700% to 900% and especially preferably essentially 800%, and the inner cover layer (30i) has a monoaxial orientation or none at all.

2. The multilayer laminate according to claim 1,
**characterized in that**
the outer cover layer (30a) is connected to the barrier layer (50), preferably directly, via an outer intermediate layer material (40a), and the inner cover layer (30i) is connected to the barrier layer (50), preferably directly, via an inner intermediate layer material (40i).

3. The multilayer laminate according to any one of the preceding claims,
**characterized in that**
the outer cover layer (30a) is at least two layers and comprises at least one polymer layer (20) and at least one sheath layer (10) in the form of a skin layer, preferably one sheath layer (10) on each side of the polymer layer (20), in particular essentially similar sheath layers with respect to thickness and material, each in the form of a skin layer, and is preferably coextruded and then drawn.

4. The multilayer laminate according to any one of the preceding claims,
**characterized in that**
the inner cover layer (30i) is designed as a monofilm or as a multilayer film, preferably two or three layers, coextruded in particular, wherein the monofilm is a polymer layer (20) in particular, or wherein the multilayer film has a polymer layer (20) comprising on at least one side, preferably on both sides, one or more, in particular essentially identical, sheath layer(s) (10) in the form of the respective skin layers, preferably arranged symmetrically with respect to the polymer layer (20), or wherein the multilayer film has a preferably central inner barrier layer (55), which is surrounded on both sides, preferably symmetrically with respect to the inner barrier layer (55), by a sheath layer (10) in particular essentially identical, for example, in the form of a skin layer, wherein an adhesion promoter or adhesive, in particular a lamination adhesive, is optionally provided between the inner barrier layer (55) and the respective skin layer (10).

5. The multilayer laminate according to any one of the preceding claims 2 to 4,
**characterized in that**
the thickness of the polymer layer (20) is 6 to 100 times, preferably 14 to 81 times and especially preferably 50 to 70 times the thickness of the sheath layer (10), in particular the skin layer.

6. The multilayer laminate according to any one of the preceding claims,
**characterized in that**
the inner cover layer (30i) is a blow-molded film with a blowing ratio in the machine direction (MD): crosswise to the machine direction (CD) in the range of 1:1 to 1:2.5, preferably in the range of 1:1.05 to 1:1.75, and especially preferably in the range of 1:1.2 to 1:1.9.

7. The multilayer laminate according to any one of the preceding claims 2 to 6,
**characterized in that**
the outer intermediate layer material (40a) is at least one layer, preferably multiple layers, in particular one to three layers, especially preferably two layers, and has a first connecting layer (43) and/or a second connecting layer (45) and/or a third connecting layer (47).

8. The multilayer laminate according to any one of the preceding claims 2 to 7,
**characterized in that**
the inner intermediate layer material (40i) is at least one layer, preferably multiple layers, in particular one to five layers, wherein alternatively or in combination, one or three layers thereof are the first connecting layer (43) and/or the second connecting layer (45) and/or the third connecting layer (47).

9. The multilayer laminate according to any one of the preceding claims 2 to 8,
**characterized in that**
the inner intermediate layer material (40i) comprises at least one additional barrier layer (70), which optionally has an adhesive layer or an adhesion-promoting layer or an adhesive layer (60) on at least one side.

10. The multilayer laminate according to any one of the preceding claims,
**characterized in that**
the respective layers each comprise materials according to the following table, either alone or in combination:
| Layer | | Material(s) |
|---|---|---|
| outer cover layer (30a) | sheath layer (10o) or skin layer | polyolefin(s), such as polyethylene (PE), in particular HDPE, LDPE or LLDPE, and/or polypropylene (PP), polyethylene terephthalate (PETP) [sic], polyethylene terephthalate glycol (PETG), mixtures of the aforementioned materials |
| | polymer layer (20o) | polyolefin(s), such as polyethylene (PE), in particular HDPE, LDPE or LLDPE, and/or polypropylene (PP), polyethylene terephthalate (PET), polyamide (PA) |
| inner cover layer (30i) | sheath layer (10n) or skin layer | polyolefin(s), such as polyethylene (PE), in particular HDPE, LDPE or LLDPE, and/or polypropylene (PP), polyethylene terephthalate (PETP) [sic], polyethylene terephthalate glycol (PETG), mixtures of the aforementioned materials |
| | polymer layer (20n) | polyolefin(s), such as polyethylene (PE), in particular HDPE, LDPE or LLDPE, and/or polypropylene (PP), polyethylene terephthalate (PET), polyamide (PA) |
| | inner barrier layer (55) | polyamide, in particular amorphous and/or aromatic and/or partially aromatic polyamide, ethylene vinyl alcohol copolymer (EVOH), polyacrylonitrile (PAN), polyethylene terephthalate (PET), mixtures of the aforementioned materials |
| first connecting layer (43) | | maleic anhydride (MA), ethylene methacrylate (EMA), ethylene acrylic acid copolymer (EAA), ionomers, terpolymers (ethylene acrylic acid-maleic acid ester anhydrides), ethylene vinyl acetates (EVA), modified olefins, mixtures of the aforementioned materials |
| second connecting layer (45) | | maleic anhydride (MA), ethylene methacrylate (EMA), ethylene acrylic acid copolymer (EAA), ionomers, terpolymers (ethylene acrylic acid-maleic acid ester anhydrides), ethylene vinyl acetates (EVA), polyolefins, in particular polyethylene (PE), polypropylene (PP), modified olefins, mixtures of the aforementioned materials |
| third connecting layer (47) | | maleic anhydride (MA), ethylene methacrylate (EMA), ethylene acrylic acid copolymer (EAA), ionomers, terpolymers (ethylene acrylic acid-maleic acid ester anhydrides), ethylene vinyl acetates (EVA), polyolefins, in particular polyethylene (PE), polypropylene (PP), modified olefins, mixtures of the aforementioned materials |
| adhesive layer or adhesion-promoting layer (60) | | maleic anhydride (MA), ethylene methacrylate (EMA), ethylene acrylic acid copolymer (EAA), ionomers, terpolymers (ethylene acrylic acid-maleic acid ester anhydrides), ethylene vinyl acetates (EVA), modified olefins, mixtures of the aforementioned materials |
| barrier layer (50) | | polyamide, in particular amorphous and/or aromatic and/or partially aromatic polyamide, ethylene vinyl alcohol copolymer (EVOH), polyacrylonitrile (PAN), polyethylene terephthalate (PET), in particular oriented polyethylene terephthalate (OPET), aluminum, SiOₓ, AlOₓ, mixtures of the aforementioned materials |
| additional barrier layer (70) | | polyamide, in particular amorphous and/or aromatic and/or partially aromatic polyamide, ethylene vinyl alcohol copolymer (EVOH), polyacrylonitrile (PAN), polyethylene terephthalate (PET), in particular oriented polyethylene terephthalate (OPET), mixtures of the aforementioned materials |

11. The multilayer laminate according to any one of the preceding claims,
**characterized in that**
the respective layers have a thickness according to the following table:
| Layer | Layer thickness | Preferred layer thickness | Especially preferred layer thickness |
|---|---|---|---|
| sheath layer (10) or skin layer | 0.2 µm-10 µm | 0.8 µm-6 µm | 1 µm-2.5 µm |
| oriented polymer layer (20) | 10 µm-100 µm | 15 µm-80 µm | 30 µm-50 µm |
| first connecting layer (43) | 5 µm-140 µm | 8 µm-95 µm | 10 µm-50 µm |
| second connecting layer (45) | 5 µm-140 µm | 8 µm-95 µm | 10 µm-50 µm |
| third connecting layer (47) | 5 µm-140 µm | 8 µm-95 µm | 10 µm-50 µm |
| adhesive layer or adhesion-promoting layer (60) | 1.5 µm-25 µm | 3 µm-18 µm | 4.5 µm-12 µm |
| barrier layer (50) or additional barrier layer (70) or inner barrier layer (55) (not in the case of an aluminum foil, SiOₓ or AlOₓ) | 3 µm-60 µm | 3.8 µm-40 µm | 4 µm-28 µm |
| barrier layer (50) in the case of aluminum foil | 3 µm-70 µm | 5 µm-40 µm | 8 µm-15 µm |

12. A tube, produced from a laminate according to any one of the preceding claims.

13. Use of a laminate according to any one of the preceding claims 1 to 11 for producing a package, in particular a tubular bag package or a tube.

## Revendications

1. Laminé multicouches, destiné à des tubes, avec couche formant barrière (50) incorporée, le laminé comportant une couche protectrice extérieure (30a) délimitant le laminé sur un côté, ainsi qu'une couche protectrice intérieure (30i) délimitant le laminé sur l'autre côté, entre lesquelles est placée la couche formant barrière (50), le laminé ayant une structure asymétrique en rapport à la couche formant barrière (50), au regard des couches protectrices (30a, 30i), , une orientation moléculaire de la couche protectrice intérieure (30i) se différenciant d'une orientation moléculaire de la couche protectrice extérieure (30a), respectivement en rapport à un allongement ou un étirage dans la direction de la machine (MD), ainsi qu'à la transversale de la direction de la machine (CD) et la couche protectrice extérieure (30a) présentant une orientation bi-axiale avec un étirage en direction de la machine (MD) de 200% à 800%, de préférence de 400% à 600% et de manière particulièrement préférentielle, de sensiblement 500% ainsi qu'à la transversale de la direction de la machine (CD) de 500% à 1300%, de préférence de 700% à 900% et de manière particulièrement préférentielle, de sensiblement 800% et la couche protectrice intérieure (30i) ne présentant aucune orientation ou une orientation mono-axiale.

2. Laminé multicouches selon la revendication 1, **caractérisé en ce que** la couche protectrice extérieure (30a) est reliée par l'intermédiaire d'une matière intercalaire extérieure (40a), de préférence directement avec la couche formant barrière (50) et la couche protectrice intérieure (30i) est reliée par l'intermédiaire d'une matière intercalaire intérieure (40i), de préférence directement avec la couche formant barrière (50).

3. Laminé multicouches selon l'une quelconque des revendications précédentes, **caractérisé en ce que** la couche protectrice extérieure (30a) est au moins bicouches et comprend au moins une couche polymère (20), ainsi qu'au moins une couche d'enveloppe (10) sous la forme d'une peau supérieure, de préférence de part et d'autre de la couche polymère (20) chaque fois une couche d'enveloppe (10) de même type, notamment en rapport à l'épaisseur et à la matière, chacune sous la forme d'une peau supérieure, et est de préférence coextrudée et puis étirée.

4. Laminé multicouches selon l'une quelconque des revendications précédentes, **caractérisé en ce que** la couche protectrice intérieure (30i) est conçue sous la forme d'un monofilm ou sous la forme d'un film multicouches, notamment coextrudé, de préférence bicouches ou tricouches, le monofilm étant notamment une couche polymère (20) ou le film multicouches comportant une couche polymère (20) qui au moins sur une face, de préférence sur les deux faces comprend une ou plusieurs couche(s) d'enveloppe, notamment sensiblement identiques, (10) sous la forme de peaux supérieures respectives, qui de préférence au niveau de la couche polymère (20) sont placées de manière symétrique, ou le film multicouches comportant une couche intérieure formant barrière (55), de préférence centrale, qui sur les deux faces et de préférence en rapport à la couche intérieure formant barrière (55), est entourée de manière symétrique par chaque fois une couche d'enveloppe (10), notamment sensiblement identique, par exemple sous la forme d'une peau supérieure, entre la couche intérieure formant barrière (55) et la peau supérieure (10) respective étant prévu le cas échéant un promoteur d'adhérence ou agent adhésif, notamment un adhésif de contre-collage,.

5. Laminé multicouches selon l'une quelconque des revendications précédentes 2 à 4, **caractérisé en ce qu'**une épaisseur de la couche polymère (20) correspond à de 6 à 100 fois, de préférence à de 14 à 81 fois et de manière particulièrement préférentielle, à de 50 à 70 fois l'épaisseur de la couche d'enveloppe (10), notamment de la peau supérieure.

6. Laminé multicouches selon l'une quelconque des revendications précédentes, **caractérisé en ce que** la couche protectrice intérieure (30i) est un film soufflé avec un rapport de soufflage direction de la machine (MD) : transversale de la direction de la machine (CD) de l'ordre de 1 : 1 à 1 : 2,5, de préférence de l'ordre de 1 : 1,05 à 1 : 1,75 et de manière particulièrement préférentielle, de l'ordre de 1 : 1,2 à 1 : 1,9 =.

7. Laminé multicouches selon l'une quelconque des revendications précédentes 2 à 6, **caractérisé en ce que** la matière intercalaire extérieure (40a) est au moins monocouche, de préférence multicouches, avec notamment de une à trois couches, de manière particulièrement préférentielle à deux couches et comporte une première (43) et/ou une deuxième (45) et/ou une troisième couche de liaison (47).

8. Laminé multicouches selon l'une quelconque des revendications précédentes 2 à 7, **caractérisé en ce que** la matière intercalaire intérieure (40i) est au moins monocouche, de préférence multicouches, avec notamment de une à cinq couches, de une à trois couches parmi celles-ci étant en variante ou en association la première (43) et/ou la deuxième (45) et/ou la troisième couche de liaison (47).

9. Laminé multicouches selon l'une quelconque des revendications précédentes 2 à 8, **caractérisé en ce que** la couche protectrice intérieure (40i) comprend au moins une couche additionnelle formant barrière (70) qui le cas échéant comporte au moins sur une face une couche adhérente ou une couche promotrice d'adhérence ou une couche d'agent adhésif (60).

10. Laminé multicouches selon l'une quelconque des revendications précédentes, **caractérisé en ce que** les couches respectives comportent des matières selon le tableau suivant, seules ou en association :
| Couche | | Matière(s) |
|---|---|---|
| Couche protectrice extérieure (30a) | Couche d'enveloppe (10o) ou peau extérieure | Polyoléfine(s), comme polyéthylène (PE), notamment **HDPE, LDPE ou LLDPE, et/ou polypropylène** (PP), polyéthylène-téréphtalate (PETP), polyéthylène-téréphtalate-glycol (PETG), mélanges des matières précédemment citées |
| | Couche polymère **(20o)** | Polyoléfine(s), comme polyéthylène (PE), notamment **HDPE, LDPE ou LLDPE, et/ou polypropylène** (PP), polyéthylène-téréphtalate (PET), polyamide (PA) |
| Couche protectrice intérieure **(30i)** | Couche d'enveloppe (10n) ou peau extérieure | Polyoléfine(s), comme polyéthylène (PE), notamment **HDPE, LDPE ou LLDPE, et/ou polypropylène** (PP), polyéthylène-téréphtalate (PETP), polyéthylène-téréphtalate-glycol (PETG), mélanges des matières précédemment citées |
| | Couche polymère (20n) | Polyoléfine(s), comme polyéthylène (PE), notamment **HDPE, LDPE ou LLDPE, et/ou polypropylène** (PP), polyéthylène-téréphtalate (PET), polyamide (PA) |
| | Couche intérieure formant barrière (55) | Polyamide, notamment polyamide amorphe et/ou aromatique et/ou partiellement aromatique polyamide, copolymère d'éthylène-alcool vinylique (EVOH), polyacrylonitrile (PAN), polyéthylène-téréphtalate (PET), mélanges des matières précédemment citées |
| Première couche de liaison **(43)** | | Anhydride maléique (MSA), méthacrylate d'éthyle (EMA), copolymères d'éthylène-acide acrylique (EAA), ionomères, terpolymères (éthylène-acide acrylique-ester de l'acide maléique-anhydrides), vinylacétates d'éthylène (EVA), oléfines modifiées, mélanges des matières précédemment citées |
| Deuxième couche de liaison **(45)** | | Anhydride maléique **(MSA),** méthacrylate d'éthyle **(EMA),** copolymères d'éthylène-acide acrylique **(EAA),** ionomères, terpolymères (éthylène-acide acrylique-ester de l'acide maléique-anhydrides), vinylacétates d'éthylène **(EVA),** polyoléfines, notamment polyéthylène (PE), polypropylène (PP), oléfines modifiées, mélanges des matières précédemment citées |
| Troisième couche de liaison **(47)** | | Anhydride maléique (MSA), méthacrylate d'éthyle (EMA), copolymères d'éthylène-acide acrylique (EAA), ionomères, terpolymères (éthylène d'acide acrylique-ester de l'acide maléique-anhydrides), vinylacétates d'éthylène (EVA), polyoléfines, notamment polyéthylène (PE), polypropylène (PP), oléfines modifiées, mélanges des matières précédemment citées |
| Couche | | Matière (s) |
|---|---|---|
| Couche adhérente ou promotrice d'adhérence (60) | | Anhydride maléique (MSA), méthacrylate d'éthyle (EMA), copolymères d'éthylène-acide acrylique (EAA), ionomères, terpolymères (éthylène-acide acrylique-ester de l'acide maléique-anhydrides), vinylacétates d'éthylène (EVA), oléfines modifiées, mélanges des matières précédemment citées |
| Couche formant barrière (50) | | Polyamide, notamment polyamide amorphe et/ou aromatique et/ou partiellement aromatique, copolymère d'éthylène-alcool vinylique (EVOH), polyacrylonitrile (PAN), polyéthylène-téréphtalate (PET), notamment polyéthylène-téréphtalate orienté (OPET), aluminium, SiOₓ, AlOₓ, mélanges des matières précédemment citées |
| Couche additionnelle formant barrière **(70)** | | Polyamide, notamment polyamide amorphe et/ou aromatique et/ou partiellement aromatique, copolymère d'éthylène-alcool vinylique (EVOH), polyacrylonitrile (PAN), polyéthylène-téréphtalate (PET), notamment polyéthylène-téréphtalate orienté (OPET), mélanges des matières précédemment citées |

11. Laminé multicouches selon l'une quelconque des revendications précédentes, **caractérisé en ce que** les couches respectives présentent une épaisseur selon le tableau suivant :
| Couche | Épaisseur de couche | Épaisseur de couche préférentielle | Épaisseur de couche particulièrement préférentielle |
|---|---|---|---|
| Couche d'enveloppe (10) ou peau supérieure | 0,2µm - 10 µm | 0,8µm - 6 µm | 1 µm - 2,5 µm |
| Couche polymère orientée (20) | 10 µm -100 µm | 15 µm - 80 µm | 30 µm - 50 µm |
| Première couche de liaison (43) | 5 µm -140 µm | 8 µm - 95 µm | 10 µm - 50 µm |
| Deuxième couche de liaison (45) | 5 µm - 140 µm | 8 µm - 95 µm | 10 µm - 50 µm |
| Troisième couche de liaison (47) | 5 µm - 140 µm | 8 µm - 95 µm | 10 µm - 50 µm |
| Couche adhérente ou promotrice d'adhérence (60) | 1,5µm - 25 µm | 3 µm - 18 µm | 4,5 µm - 12 µm |
| Couche formant barrière (50) ou couche additionnelle formant barrière (70) ou couche intérieure formant barrière (55) | 3 µm - 60 µm | 3,8 µm - 40 µm | 4 µm - 28 µm |
| (pas dans le cas d'un film aluminium, SiOₓ ou AlOₓ) | | | |
| Couche formant barrière (50) dans le cas d'un film aluminium | 3 µm - 70 µm | 5 µm - 40 µm | 8 µm - 15 µm |

12. Tube, fabriqué dans un laminé selon l'une quelconque des revendications précédentes.

13. Utilisation d'un laminé selon l'une quelconque des revendications précédentes 1 à 11 pour la fabrication d'un emballage, notamment d'un emballage sous forme de sachet tubulaire ou d'un tube.
